(19) **Europäisches Patentamt**
**European Patent Office**
**Office européen des brevets**

(11) **EP 3 523 956 B1**

(12) **EUROPEAN PATENT SPECIFICATION**

(45) Date of publication and mention
of the grant of the patent:
**07.06.2023 Bulletin 2023/23**

(21) Application number: **17857891.0**

(22) Date of filing: **04.09.2017**

(51) International Patent Classification (IPC):
*H04N 5/232* (2006.01)    *G06T 3/00* (2006.01)
*H04N 19/503* (2014.01)    *H04N 19/593* (2014.01)
*H04N 21/854* (2011.01)    *H04N 21/81* (2011.01)

(52) Cooperative Patent Classification (CPC):
**H04N 19/597; H04N 19/132; H04N 19/147;**
**H04N 19/182; H04N 19/33; H04N 19/59;**
**H04N 21/816; H04N 21/85406**

(86) International application number:
**PCT/FI2017/050616**

(87) International publication number:
**WO 2018/065663 (12.04.2018 Gazette 2018/15)**

(54) **AN APPARATUS AND METHOD FOR VIDEO PROCESSING**

VORRICHTUNG UND VERFAHREN ZUR VIDEOBEARBEITUNG

APPAREIL ET PROCÉDÉ DE TRAITEMENT VIDÉO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **04.10.2016 GB 201616808**

(43) Date of publication of application:
**14.08.2019 Bulletin 2019/33**

(73) Proprietor: **Nokia Technologies Oy
02610 Espoo (FI)**

(72) Inventors:
• **KAMMACHI SREEDHAR, Kashyap
33710 Tampere (FI)**
• **HANNUKSELA, Miska
33610 Tampere (FI)**
• **AFLAKI BENI, Payman
33720 Tampere (FI)**

(74) Representative: **Berggren Oy
P.O. Box 16
Eteläinen Rautatiekatu 10A
00101 Helsinki (FI)**

(56) References cited:
**EP-A1- 3 511 909     WO-A1-2016/010668**

• **Ramin Ghaznavi Youvalari: "360-Degree
Panoramic Video Coding", , 1 August 2016
(2016-08-01), XP055340235, Retrieved from the
Internet:
URL:http://dspace.cc.tut.fi/dpub/bitstream
/handle/123456789/24326/ghaznavi.pdf?seque
nce=1&isAllowed=y [retrieved on 2017-01-30]**
• **LI JISHENG ET AL: "Novel tile segmentation
scheme for omnidirectional video", 2016 IEEE
INTERNATIONAL CONFERENCE ON IMAGE
PROCESSING (ICIP), IEEE, 25 September 2016
(2016-09-25), pages 370-374, XP033016554, DOI:
10.1109/ICIP.2016.7532381 [retrieved on
2016-08-03]**
• **CHOI, B. ET AL.: "WD on ISO/IEC 23000-20
Omnidirectional Media Application Format",
ISO/IEC JTC1/SC29/WG11 N16189, 1 June 2016
(2016-06-01), XP055517901, Retrieved from the
Internet:
URL:https://mpeg.chiariglione.org/standard
s/mpeg-a/omnid i rectiona l-med ia-
application-format/wd-isoiec-23000-20-omni
directional-media**

- **DIMITRIJEVIC, AM . ET AL.: "Comparison of spherical cube map projections used in planet-sized terrain rendering. In: Facta Universitatis (Nis) Ser", MATH. INFORM., vol. 31, no. 2 30 June 2016 (2016-06-30), pages 259-297, XP055484426, Retrieved from the Internet: URL:http://casopisi.junis.ni.ac.rs/index.p hp/FUMathInf/article/view/871 [retrieved on 2018-01-15]**

**Description**

Technical Field

The present solution generally relates to an apparatus, a method and a computer program for video coding and decoding.

Background

This section is intended to provide a background or context to the invention that is recited in the claims. The description herein may include concepts that could be pursued, but are not necessarily the ones that have been previously conceived or pursued. Therefore, unless otherwise indicated herein, what is described in this section is not prior art to the description and claims in this application and is not admitted to be prior art by inclusion in this section.

A video coding system may comprise an encoder that transforms an input video into a compressed representation suited for storage/transmission and a decoder that can uncompress the compressed video representation back into a viewable form. The encoder may discard some information in the original video sequence in order to represent the video in a more compact form, for example, to enable the storage/transmission of the video information at a lower bitrate than otherwise might be needed.

A publication EP 3 511 909 discloses an image processing method and device for projecting image of virtual reality content. The solution comprises acquiring a first planar image projected by dividing a front part and a rear part of a spherical image for expressing a 360-degree image, generating a second planar image projected by sampling the first planar image on the basis of a pixel position; and encoding the second planar image.

Summary

The invention and the particular embodiments for which protection is sought are defined by the appended set of claims.

Some embodiments provide a method for encoding and decoding video information.

In some embodiments of the present invention there is provide a method, an apparatus and a computer program product for video coding.

According to a first aspect, there is provided a method comprising obtaining a panorama picture having a plurality of sample rows in a top region, a middle region and a bottom region; resampling the plurality of sample rows of the top and the bottom region of the panorama picture into a plurality of resampled sample rows with decreasing sampling density towards the top-most sample row of the top region respectively the bottom-most sample row of the bottom region of the panorama picture, while retaining the plurality of sample rows of the middle region; and rearranging the plurality of resampled sample rows of the top and the bottom region treated as one-dimensional signals, along a scan consisting of a plurality of nested polygonal chains into a rearranged top sample array and a rearranged bottom sample array, wherein rearranging comprises arranging the resampled top-most sample row of the top region of the panorama picture to the innermost polygonal chain in the rearranged top sample array and arranging the resampled sample row furthest away from the top-most sample row of the panorama picture to the outmost polygonal chain in the rearranged top sample array; and arranging the resampled bottom-most sample row of the bottom region of the panorama picture to the innermost polygonal chain in the rearranged bottom sample array and arranging the resampled sample row furthest away from the bottom-most sample row of the panorama picture to the outmost polygonal chain in the rearranged bottom sample array; and packing the rearranged top and bottom sample arrays into a single video frame together with the middle region or into a video frame separately from the middle region.

According to an embodiment, the method further comprises encoding the rearranged sample array.

According to an embodiment, the method further comprises obtaining the plurality of sample rows by reconstructing the plurality of sample rows as a part of encoding an original picture or decoding the plurality of sample rows from an encoded picture; and using the rearranged sample array as a reference for intra prediction, inter prediction, or inter-layer prediction.

According to an embodiment, the method further comprises resampling a plurality of sample rows of several regions of the picture into a plurality of resampled sample rows; and rearranging the resampled sample rows into a several rearranged sample arrays.

According to an embodiment, the method further comprises packing the several rearranged sample arrays into a single frame.

According to an embodiment, the method further comprises packing the several rearranged sample arrays into different frames.

According to an embodiment, the nested polygonal chain scan comprises arranging the top-most sample row and the bottom-most sample row of the picture to an innermost polygonal chain in the rearranged sample array, and arranging sample rows furthest away from the top-most sample row and the bottom-most sample row of the picture to an outmost polygonal chain in the rearranged sample array.

According to an embodiment, the sample row comprises one or more samples from one of the following group: luma samples, chroma samples, both luma and chroma samples.

According to a second aspect, there is provided a method comprising obtaining a top and a bottom rearranged sample array and a middle region of a panorama picture comprised in a single or separate video frames, the top and the bottom rearranged sample arrays comprising resampled sample rows of a top and a bottom region of the panorama picture arranged as one-dimensional signals along a scan consisting of a plurality of nested polygonal chains, wherein the resampled top-most sample row of the top region of the panorama picture is arranged along the innermost polygonal chain in the rearranged top sample array, and the resampled sample row furthest away from the top-most sample row of the panorama picture is arranged along the outmost polygonal chain in the rearranged top sample array; and the resampled bottom-most sample row of the bottom region of the panorama picture is arranged along the innermost polygonal chain in the rearranged bottom sample array, and the resampled sample row furthest away from the bottom-most sample row of the panorama picture is arranged along the outmost polygonal chain in the rearranged bottom sample array; extracting each resampled sample row by treating a corresponding polygonal chain of the plurality of nested polygonal chains as a one-dimensional signal along a scan order; upsampling the resampled sample rows to the row width of top and bottom regions of the panorama picture; arranging the sample row into a top and a bottom sample array to reconstruct the top and the bottom regions of the panorama picture.

According to an embodiment, the method further comprises obtaining the rearranged sample array by decoding an encoded frame or by reconstructing a frame as a part of encoding an original frame.

According to an embodiment, the method further comprises using the sample array as a reference for intra prediction, inter prediction or inter-layer prediction.

According to a third aspect, there is provided an apparatus comprising at least one processor, memory including computer program code, the memory and the computer program code configured to, with the at least one processor, cause the apparatus to perform at least the following obtain a panorama picture having a plurality of sample rows in a top region, a middle region and a bottom region; resample the plurality of sample rows of the top and the bottom region of the panorama picture into a plurality of resampled sample rows with decreasing sampling density towards the top-most sample row of the top region respectively the bottom-most sample row of the bottom region of the panorama picture, while retaining the plurality of sample rows of the middle region; and rearrange the plurality of resampled sample rows of the top and the bottom region treated as one-dimensional signals, along a scan consisting of a plurality of nested polygonal chains into a rearranged top sample array and a rearranged bottom sample array, wherein rearranging comprises arranging the resampled top-most sample row of the top region of the panorama picture to the innermost polygonal chain in the rearranged top sample array and arranging the resampled sample row furthest away from the top-most sample row of the panorama picture to the outmost polygonal chain in the rearranged top sample array; and arranging the resampled bottom-most sample row of the bottom region of the panorama picture to the innermost polygonal chain in the rearranged bottom sample array and arranging the resampled sample row furthest away from the bottom-most sample row of the panorama picture to the outmost polygonal chain in the rearranged bottom sample array; and packing the rearranged top and bottom sample arrays into a single video frame together with the middle region or into a video frame separately from the middle region.

According to an embodiment, the apparatus further comprises computer program code configured to cause the apparatus to encode the rearranged sample array.

According to an embodiment, the apparatus further comprises computer program code configured to cause the apparatus to obtain the plurality of sample rows by reconstructing the plurality of sample rows as a part of encoding an original picture or decoding the plurality of sample rows from an encoded picture; and to use the rearranged sample array as a reference for intra prediction, inter prediction, or inter-layer prediction.

According to an embodiment, the apparatus further comprises computer program code configured to cause the apparatus to resample a plurality of sample rows of several regions of the picture into a plurality of resampled sample rows; and to rearrange the resampled sample rows into a several rearranged sample arrays.

According to an embodiment, the apparatus further comprises computer program code configured to cause the apparatus to pack the several rearranged sample arrays into a single frame.

According to an embodiment, the apparatus further comprises computer program code configured to cause the apparatus to pack the several rearranged sample arrays into different frames.

According to an embodiment, the nested polygonal chain scan comprises arranging the top-most sample row and the bottom-most sample row of the picture to an innermost polygonal chain in the rearranged sample array, and arranging sample rows furthest away from the top-most sample row and the bottom-most sample row of the picture to an outmost polygonal chain in the rearranged sample array.

According to an embodiment, the sample row comprises one or more samples from one of the following group:

luma samples, chroma samples, both luma and chroma samples.

According to a fourth aspect, there is provided an apparatus comprising apparatus comprising at least one processor, memory including computer program code, the memory and the computer program code configured to, with the at least one processor, cause the apparatus to perform at least the following obtain a top and a bottom rearranged sample array and a middle region of a panorama picture comprised in a single or separate video frames, the top and the bottom rearranged sample arrays comprising resampled sample rows of a top and a bottom region of the panorama picture arranged as one-dimensional signals along a scan consisting of a plurality of nested polygonal chains, wherein the resampled top-most sample row of the top region of the panorama picture is arranged along the innermost polygonal chain in the rearranged top sample array, and the resampled sample row furthest away from the top-most sample row of the panorama picture is arranged along the outmost polygonal chain in the rearranged top sample array; and the resampled bottom-most sample row of the bottom region of the panorama picture is arranged along the innermost polygonal chain in the rearranged bottom sample array, and the resampled sample row furthest away from the bottom-most sample row of the panorama picture is arranged along the outmost polygonal chain in the rearranged bottom sample array; extract each resampled sample row by treating a corresponding polygonal chain of the plurality of nested polygonal chains as a one-dimensional signal along a scan order; upsample the resampled sample rows to the row width of top and bottom regions of the panorama picture; arrange the sample row into a top and a bottom sample array to reconstruct the top and the bottom regions of the panorama picture.

According to an embodiment, the apparatus further comprises computer program code configured to cause the apparatus to obtain the rearranged sample array by decoding an encoded frame or by reconstructing a frame as a part of encoding an original frame.

According to an embodiment, the apparatus further comprises computer program code configured to cause the apparatus to use the sample array as a reference for intra prediction, inter prediction or inter-layer prediction.

According to a fifth aspect, there is provided an apparatus comprising means for obtaining a panorama picture having a plurality of sample rows in a top region, a middle region and a bottom region; means for resampling the plurality of sample rows of the top and the bottom region of the panorama picture into a plurality of resampled sample rows with decreasing sampling density towards the top-most sample row of the top region respectively the bottom-most sample row of the bottom region of the panorama picture, while retaining the plurality of sample rows of the middle region; and means for rearranging the plurality of resampled sample rows of the top and the bottom region, treated as one-dimensional signals, along a scan consisting of a plurality of nested polygonal chains to fill a rearranged top sample array and a rearranged bottom sample array, wherein rearranging comprises arranging the resampled top-most sample row of the top region of the panorama picture to the innermost polygonal chain in the rearranged top sample array, and arranging the resampled sample row furthest away from the top-most sample row of the panorama picture to the outmost polygonal chain in the rearranged top sample array; means for arranging the resampled bottom-most sample row of the bottom region of the panorama picture to the innermost polygonal chain in the rearranged bottom sample array and arranging the resampled sample row furthest away from the bottom-most sample row of the panorama picture to the outmost polygonal chain in the rearranged bottom sample array; and means for packing the rearranged top and bottom sample arrays into a single video frame together with the middle region or into a video frame separately from the middle region.

According to a sixth aspect, there is provided an apparatus comprising means for obtaining a top and a bottom rearranged sample array and a middle region of a panorama picture comprised in a single or separate video frames, the top and the bottom rearranged sample arrays comprising resampled sample rows of a top and a bottom region of the panorama picture arranged as one-dimensional signals along a scan consisting of a plurality of nested polygonal chains, wherein the resampled top-most sample row of the top region of the panorama picture is arranged along the innermost polygonal chain in the rearranged top sample array, and the resampled sample row furthest away from the top-most sample row of the panorama picture is arranged along the outmost polygonal chain in the rearranged top sample array; and the resampled bottom-most sample row of the bottom region of the panorama picture is arranged along the innermost polygonal chain in the rearranged bottom sample array, and the resampled sample row furthest away from the bottom-most sample row of the panorama picture is arranged along the outmost polygonal chain in the rearranged bottom sample array; means for extracting each resampled sample row by treating a corresponding polygonal chain of the plurality of nested polygonal chains as a one-dimensional signal along a scan order; means for upsampling the resampled sample rows to the row width of top and bottom regions of the panorama picture; and means for arranging the sample row into a top and a bottom sample array to reconstruct the top and the bottom regions of the panorama picture.

According to a seventh aspect, there is provided a computer program product embodied on a non-transitory computer readable medium, comprising computer program code configured to, when executed on at least one processor, cause an apparatus or a system to obtain a panorama picture having a plurality of sample rows in a top region, a middle region and a bottom region; resamples the plurality of sample rows of the top and the bottom region of the panorama picture into a plurality of resampled sample rows with decreasing sampling density towards the top-most sample row of the top region respectively the bottom-most sample row of the bottom region of the panorama picture, while retaining the plurality of sample rows of the middle region; and rearrange the plurality of resampled sample rows of the top and the bottom region treated as one-dimensional signals, along a scan consisting of a plurality of nested polygonal chains into a rearranged top sample array and a rearranged bottom sample array, wherein rearranging comprises arranging the resampled top-most sample row of the top region of the panorama picture to the innermost polygonal chain in the rearranged top sample array and arranging the resampled sample row furthest away from the top-most sample row of the panorama picture to the outmost polygonal chain in the rearranged top sample array; and arranging the resampled bottom-most sample row of the bottom region of the panorama picture to the innermost polygonal chain in the rearranged bottom sample array and arranging the resampled sample row furthest away from the bottom-most sample row of the panorama picture to the outmost polygonal chain in the rearranged bottom sample array; and packing the rearranged top and bottom sample arrays into a single video frame together with the middle region or into a video frame separately from the middle region.

According to an eighth aspect, there is provided a computer program product embodied on a non-transitory computer readable medium, comprising computer program code configured to, when executed on at least one processor, cause an apparatus or a system to obtain a top and a bottom rearranged sample array and a middle region of a panorama picture comprised in a single or separate video frames, the top and the bottom rearranged sample arrays comprising resampled sample rows of a top and a bottom region of the panorama picture arranged as one-dimensional signals along a scan consisting of a plurality of nested polygonal chains, wherein the resampled top-most sample row of the top region of the panorama picture is arranged along the innermost polygonal chain in the rearranged top sample array, and the resampled sample row furthest away from the top-most sample row of the panorama picture is arranged along the outmost polygonal chain in the rearranged top sample array; and the resampled bottom-most sample row of the bottom region of the panorama picture is arranged along the innermost polygonal chain in the rearranged bottom sample array, and the resampled sample row furthest away from the bottom-most sample row of the panorama picture is arranged along the outmost polygonal chain in the rearranged bottom sample array; extract each resampled sample row by treating a corresponding polygonal chain of the plurality of nested polygonal chains as a one-dimensional signal along a scan order; upsample the resampled sample rows to the row width of top and bottom regions of the panorama picture; arrange the sample row into a top and a bottom sample array to reconstruct the top and the bottom regions of the panorama picture.

Description of the Drawings

In the following, various embodiments of the invention will be described in more detail with reference to the appended drawings, in which

Fig. 1 shows a block diagram of a video coding system according to an embodiment;
Fig. 2 shows a layout of an apparatus according to an embodiment;
Fig. 3 shows an example of a system;
Fig. 4 shows a block diagram of a video encoder;
Fig. 5 shows an example of a equirectangular panorama image;
Fig. 6 shows an embodiment of a resampling of a panorama picture;
Fig. 7a, b shows another embodiment of a resampling of a panorama picture;
Fig. 8 shows yet another embodiment of a resampling of a panorama picture;
Fig. 9 shows yet another embodiment of a resampling of a panorama picture;
Fig. 10 shows an embodiment of a pre-processing and framed packed encoding and decoding;
Fig. 11 shows an embodiment of motion-constrained tiles;
Fig. 12 shows an embodiment of a multiresolution motion-constrained tiles;
Fig. 13 shows an embodiment of an inter-layer processing;
Fig. 14 shows an embodiment of a guided rewriting;
Fig. 15 is a flowchart of a method according to an embodiment; and
Fig. 16 is a flowchart of a method according to another embodiment.

Description of Example Embodiments

The scope of protection sought for various embodiments of the invention is set out by the independent claims. The embodiments and features, if any, described in this specification that do not fall under the scope of the independent claims are to be interpreted as examples useful for understanding various embodiments of the invention.

In the following, several embodiments of the invention will be described in the context of one video coding arrangement. It is to be noted, however, that the invention is not limited to this particular arrangement. In fact, the different embodiments have applications widely in any environment where improvement of non-scalable, scalable and/or multiview video coding is required. For example, the invention may be applicable to video coding systems like streaming systems, DVD players, digital television receivers, personal video recorders, systems and computer programs on person a computers, handheld computers and communication devices, as well as network elements such as transcoders and cloud computing arrangements where video data is handled.

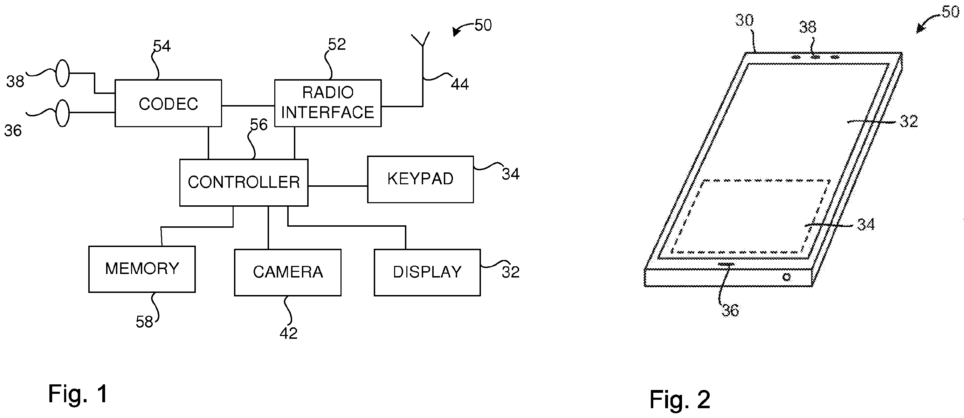

The following describes in further detail suitable apparatus and possible mechanism for implementing some embodiments. In this regard, reference is first made to Figures 1 and 2, where Figure 1 shows a block diagram of a video coding system according to example embodiment as a schematic block diagram of an exemplary apparatus or electronic device 50, which may incorporate a codec according to an embodiment of the invention. Figure 2 shows a layout of an apparatus according to an example embodiment. The elements of Figs. 1 and 2 will be explained next.

The electronic device 50 may for example be a mobile terminal or user equipment of a wireless communication system. However, it would be appreciated that embodiments of the invention may be implemented within any electronic device or apparatus which may require encoding and decoding, or encoding or decoding video images.

The apparatus 50 may comprise a housing 30 for incorporating and protecting the device. The apparatus 50 may further comprise a display 32 in the form of a liquid crystal display. In other embodiments of the invention, the display may be any suitable display technology suitable to display an image or video. The apparatus 50 may further comprise a keypad 34. In other embodiments of the invention, any suitable data or user interface mechanism may be employed. For example, the user interface may be implemented as a virtual keyboard or data entry system as part of a touch-sensitive display.

The apparatus may comprise a microphone 36 or any suitable audio input which may be a digital or analogue signal input. The apparatus 50 may further comprise and audio output device, which in embodiments of the invention may be any one of: an earpiece 38, speaker, or an analogue audio or digital audio output connection. The apparatus 50 may also comprise a battery 40 (or in other embodiments of the invention the device may be powered by any suitable mobile energy device such as solar cell, fuel cell or clockwork generator). The apparatus may further comprise a camera 42 capable of recording or capturing images and/or video. The apparatus 50 may further comprise an infrared port for short range line of sight communication to other device. In other embodiments the apparatus 50 may further comprise any suitable short range communication solution such as for example a Bluetooth wireless connection or a USB/firewire wired connection.

The apparatus 50 may comprise a controller 56 or processor for controlling the apparatus 50. The controller 56 may be connected to memory 58 which in embodiments of the invention may store both data in the form of image and audio data and/or may also store instructions for implementation on the controller 56. The controller 56 may further be connected to codec circuitry 54 suitable for carrying out coding and decoding of audio and/or video data or assisting in coding and decoding carried out by the controller.

The apparatus 50 may further comprise a card reader 48 and a smart card 46, for example a UICC and UICC reader for providing user information and being suitable for providing authentication information for authentication and authorization of the user at a network.

The apparatus 50 may comprise a radio interface circuitry 52 connected to the controller and suitable for generating wireless communication signals for example for communication with a cellular communications network, a wireless communications system or a wireless local area network. The apparatus 50 may further comprise an antenna 44 connected to the radio interface circuitry 52 for transmitting radio frequency signals generated at the radio interface circuitry 52 to other apparatus(es) and for receiving radio frequency signals from other apparatus(es).

The apparatus 50 may comprise a camera capable of recording or detecting individual frames which are then passed to the codec 54 or the controller for processing. The apparatus may receive the video image data for processing from another device prior to transmission and/or storage. The apparatus 50 may also receive either wirelessly or by a wired connection the image for coding/decoding.

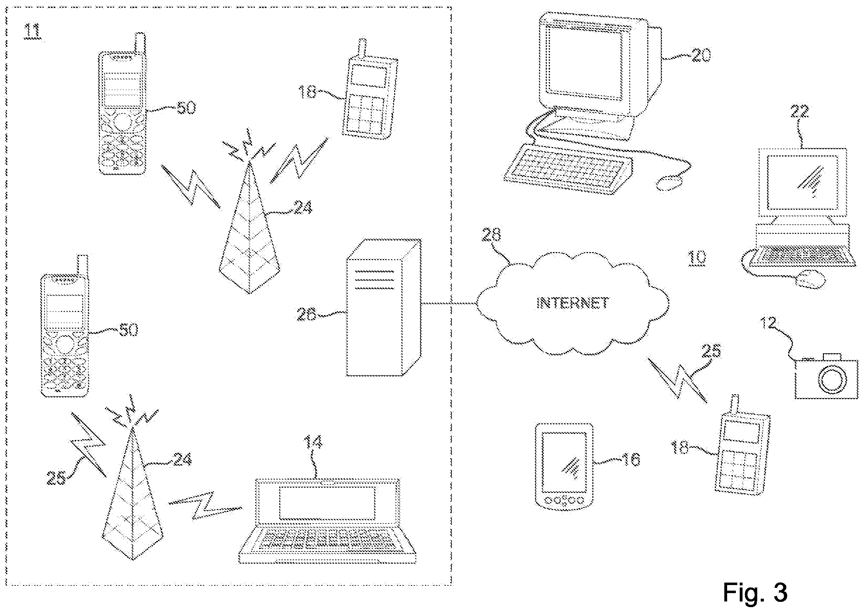

With respect to Figure 3, an example of a system within which embodiments of the present invention can be utilized is shown. The system 10 comprises multiple communication devices which can communicate through one or more networks. The system 10 may comprise any combination of wired or wireless networks including, but not limited to a wireless cellular telephone network (such as a GSM, UMTS, CDMA network etc.), a wireless local area network (WLAN) such as defined by any of the IEEE 802.x standards, a Bluetooth personal area network, an Ethernet local area network, a token ring local area network, a wide area network, and the Internet.

The system 10 may include both wired and wireless communication devices and/or apparatus 50 suitable for implementing embodiments of the invention.

For example, the system shown in Figure 3 shows a mobile telephone network 11 and a representation of the internet 28. Connectivity to the internet 28 may include, but is not limited to, long range wireless connections, short range wireless connections and various wired connections including, but not limited to, telephone lines, cable lines, power lines, and similar communication pathways.

The example communication devices shown in the system 10 may include, but are not limited to, an electronic device or apparatus 50, a combination of a personal digital assistant (PDA) and a mobile telephone 14, a PDA 16, an integrated messaging device (IMD) 18, a desktop computer 20, a notebook computer 22. The apparatus 50 may be stationary or mobile when carried by an individual who is moving. The apparatus 50 may also be located in a mode of transport including, but not limited to, a car, a truck, a taxi, a bus, a train, a boat, an airplane, a bicycle, a motorcycle or any similar suitable mode of transport.

The embodiments may also be implemented in a set-top box; i.e. a digital TV receiver which may/may not have a display or wireless capabilities, in tablets or (laptop) personal computers (PC), which have hardware or software or combination of the encoder/decoder implementations, in various operating systems, and in chipsets, processors, DSPs and/or embedded systems offering hardware/software based coding.

Some or further apparatus may send and receive calls and messages and communicate with service providers through a wireless connection 25 to a base station 24. The base station 24 may be connected to a network server 26 that allows communication between the mobile telephone network 11 and the internet 28. The system may include additional communication devices and communication devices or various types.

The communication devices may communicate using various transmission technologies including, but not limited to, code division multiple access (CDMA), global systems for mobile communications (GSM), universal mobile telecommunications system (UMTS), time divisional multiple access (TDMA), frequency division multiple access (FDMA), transmission control protocol-internet protocol (TCP-IP), short messaging service (SMS), multimedia messaging service (MSS), email, instant messaging service (IMS), Bluetooth, IEEE 802.11 and any similar wireless communication technology. A communications device involved in implementing various embodiments of the present invention may communicate using various media including, but not limited to, radio, infrared, laser, cable connections, and any suitable connection.

Real-time Transport Protocol (RTP) is widely used for real-time transport of timed media such as audio and video. RTP may operate on top of the User Datagram Protocol (UDP), which in turn may operate on top of the Internet Protocol (IP). RTP is specified in Internet Engineering Task Force (IETF) Request for Comments (RFC) 3550, available from www.ietf.org/rfc/rfc3550.txt. In RTP transport, media data is encapsulated into RTP packets. Typically, each media type or media coding format has a dedicated RTP payload format.

An RTP session is an association among a group of participants communicating with RTP. It is a group communications channel which can potentially carry a number of RTP streams. An RTP stream is a stream of RTP packets comprising a media data. An RTP stream is identified by an SSRC belonging to a particular RTP session. SSRC refers to either a synchronization source or a synchronization source identifier that is the 32-bit SSRC field in the RTP packet header. A synchronization source is characterized in that all packets from the synchronization source form part of the same timing and sequence number space, so a receiver may group packets by synchronization source for playback. Examples of synchronization sources include the sender of a stream of packets derived from a signal source such as a microphone or a camera, or an RTP mixer. Each RTP stream is identified by a SSRC that is unique within the RTP session.

Video codec consist of an encoder that transforms the input video into a compressed representation suited for storage/transmission and a decoder that can uncompress the compressed video representation back into a viewable form. A video encoder and/or a video decoder may also be separate from each other, i.e. need not form a codec. The encoder may discard some information in the original video sequence in order to represent the video in a more compact form (that is, at lower bitrate). A video encoder may be used to encode an image sequence, as defined subsequently, and a video decoder may be used to decode a coded image sequence. A video encoder or an intra coding part of a video encoder or an image encoder may be used to encode an image, and a video decoder or an inter decoding part of a video decoder or an image decoder may be used to decoded a coded image.

Some hybrid video encoders, for example many encoder implementations of ITU-T H.263 and H.264, encode the video information in two phases. Firstly, pixel values in a certain picture are (or "block") are predicated for example by motion compensation means (finding and indicating an area in one of the previously coded video frames that correspond closely to the block being coded) or by spatial means (using the pixel values around the block to be coded in a specified manner). Secondly, the prediction error, i.e. the difference between the predicated block of pixels and the original block of pixels, is coded. This may be done by transforming the difference in pixel values using a specified transform (e.g. Discrete Cosine Transform (DCT) or a variant of it), quantizing the coefficients and entropy coding the quantized coefficients. By varying the fidelity of the quantization process, encoder can control the balance between the accuracy of the pixel representation (picture quality) and size of the resulting coded video representation (file size or transmission bitrate).

In temporal prediction, the sources of prediction are previously decoded picture (a.k.a. reference pictures). In intra block copy (a.k.a. intra-block-copy prediction), prediction is applied similarly to temporal prediction but the reference picture is the current picture and only previously decoded samples can be referred in the prediction process. Inter-layer or inter-view prediction may be applied similarly to temporal prediction, but the reference picture is a decoded picture from another scalable layer or from another view, respectively. In some cases, inter prediction may refer to temporal prediction only, while in other cases inter prediction may refer collectively to temporal prediction and any of intra block copy, inter-layer prediction, and inter-view prediction provided that they are performed with the same or similar process than temporal prediction. Inter prediction or temporal prediction may sometimes be referred to as motion compensation or motion-compensated prediction.

Intra prediction utilizes the fact that adjacent pixels within the same picture are likely to be correlated. Intra prediction can be performed in spatial or transform domain, i.e., either sample values or transform coefficients can be predicted. Intra prediction is typically exploited in intra coding, where no inter prediction is applied.

There may be different types of intra prediction modes available in a coding scheme, out of which an encoder can select and indicate the used one, e.g. on block or coding unit basis. A decoder may decode the indicated intra prediction mode and reconstruct the prediction block accordingly. For example, several angular intra prediction modes, each for different angular direction, may be available. Angular intra prediction may be considered to extrapolate the border samples of adjacent blocks along a linear prediction direction. Additionally or alternatively, a planar prediction mode may be available. Planar prediction may be considered to essentially form a prediction block, in which each sample of a prediction block may be specified to be an average of vertically aligned sample in the adjacent sample column on the left of the current block and the horizontally aligned sample in the adjacent sample line above the current block. Additionally or alternatively, a DC prediction mode may be available, in which the prediction block is an average sample value of a neighboring block or blocks.

One outcome of the coding procedure is a set of coding parameters, such as motion vectors and quantized transform coefficients. Many parameters can be entropycoded more efficiently if they are predicted first from spatially or temporally neighboring parameters. For example, a motion vector may be predicted from spatially adjacent motion vectors and only the difference relative to the motion vector predictor may be coded. Prediction of coding parameters and intra prediction may be collectively referred to as in-picture prediction.

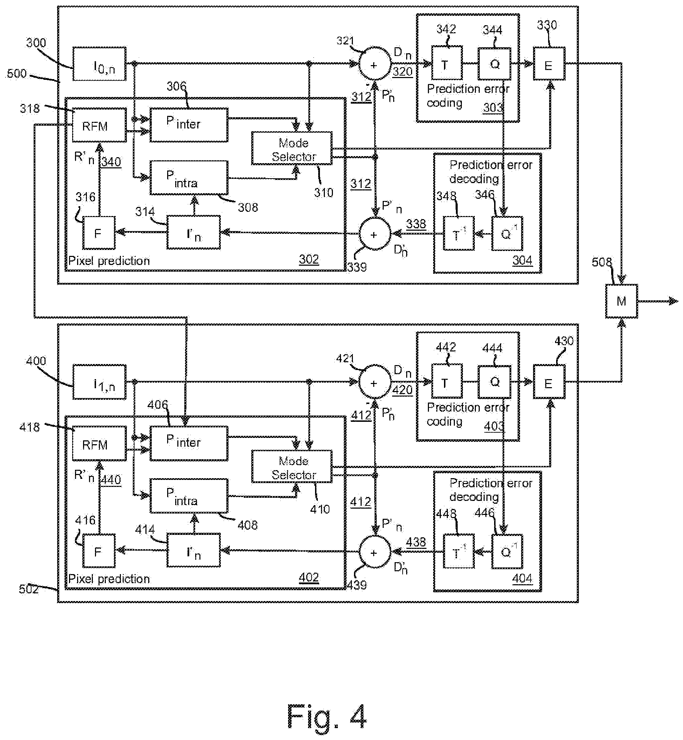

Figure 4 shows a block diagram of a video encoder suitable for employing embodiments of the invention. Figure 4 presents an encoder for two layers, but it would be appreciated that presented encoder could be similarly simplified to encode only one layer or extended to encode more than two layers. Figure 4 illustrates an embodiment of a video encoder comprising a first encoder section 500 for a base layer and a second encoder section 502 for an enhancement layer. Each of the first encoder section 500 and the second encoder section 502 may comprise a pixel predictor 302, 402, prediction error encoder 303, 403 and prediction error decoder 304, 404. Figure 4 also shows an embodiment of the pixel predictor 302, 402 as comprising an inter-predictor 306, 406, and intra-predictor 308, 408, a mode selector 310, 410, a filter 316, 416, and a reference frame memory 318, 418. The pixel predictor 302 of the first encoder section 500 receives base layer images 300 of a video stream to be encoded at both the inter-predictor 306 (which determines the difference between the image and a motion compensated reference frame 318) and the intra-predictor 308 (which determines a prediction for an image block based only on the already processed parts of current frame or picture). The output of both the inter-predictor and the intra-predictor are passed to the mode selector 310. The intra-predictor 308 may have more than one intra-prediction modes. Hence, each mode may perform the intra-prediction and provide the predicted signal to the mode selector 310. The mode selector 310 also receives a copy of the base layer picture 300. Correspondingly, the pixel predictor 402 of the second encoder section 502 receives enhancement layer images 400 of a video stream to be encoded at both the inter-prediction 406 (which determines the difference between the image and a motion compensated reference frame 418) and the intra-predictor 408 (which determines a prediction for an image block based only on the already processed parts of the current frame or picture). The output of both the inter-predictor and the intra-predictor are passed to the mode selector 410. The intra-predictor 408 may have more than one intra-prediction modes. Hence each mode may perform the intra-prediction and provide the predicted signal to the mode selector 410. The mode selector 410 also receives a copy of the enhancement layer picture 400.

Depending on which encoding mode is selected to encode the current block, the output of the inter-predictor 306, 406 or the output of one of the optional intra-predictor modes or the output of a surface encoder within the mode selector is passed to the output of the mode selector 310, 410. The output of the mode selector is passed to a first summing device 321, 421. The first summing device may subtract the output of the pixel predictor 302, 402 from the base layer picture 300/enhancement layer picture 400 to produce a first prediction error signal 320, 420 which is input to the prediction error encoder 303, 403.

The pixel predictor 302, 402 further receives from a preliminary reconstructor 339, 439 the combination of the prediction representation of the image block 312, 412 and the output 338, 438 of the prediction error decoder 304, 404. The preliminary reconstructed image 314, 414 may be passed to the intra-predictor 308, 408 and to a filter 316, 416. The filter 316, 416 receiving the preliminary representation may filter the preliminary representation and output a final reconstructed image 340, 440 which may be save in a reference frame memory 318, 418. The reference frame memory 318 may be connected to the inter-predictor 306 to be used as the reference image against which a future base layer picture 300 is compared in inter-prediction operations. Subject to the base layer being selected and indicated to be source for inter-layer sample prediction and/or inter-layer motion information prediction of the enhancement layer according to some embodiments, the reference frame memory 318 may also be connected to the inter-predictor 406 to be used as the reference image against which a future enhancement layer pictures 400 is compared in inter-prediction operations. Moreover, the reference frame memory 418 may be connected to the inter-predictor 406 to be used as the reference image against which a future enhancement layer picture 400 is compared in inter-prediction operations.

Filtering parameters from the filter 316 of the first encoder section 500 may be provided to the second encoder section 502 subject to the base layer being selected and indicated to be source for predicting the filtering parameters of the enhancement layer according to some embodiments.

The prediction error encoder 303, 403 comprises a transform unit 342, 442 and a quantizer 344, 444. The transform unit 342, 442 transforms the first prediction error signal 320, 420 to a transform domain. The transform is, for example, the DCT transform. The quantizer 344, 444 quantizes the transform domain signal, e.g. the DCT coefficients, to form quantized coefficients.

The prediction error decoder 304, 404 receives the output from the prediction error encoder 303, 403 and performs the opposite processes of the prediction error encoder 303, 403 to produce a decoded prediction error signal 338, 438 which, when combined with the prediction representation of the image block 312, 412 at the second summing device 339, 439, produces the preliminary reconstructed image 314, 414. The prediction error decoder may be considered to comprise a dequantizer 361, 461, which dequantizes the quantized coefficient values, e.g. DCT coefficients, to reconstruct the transform signal and an inverse transformation unit 363, 463, which performs the inverse transformation to the reconstructed transform signal wherein the output of the inverse transformation unit 363, 463 contains reconstructed block(s). The prediction error decoder may also comprise a block filter which may filter the reconstructed block(s) according to further decoded information and filter parameters.

The entropy encoder 330, 430 receives the output of the prediction error encoder 303, 403 and may perform a suitable entropy encoding/variable length encoding on the signal to provide error detection and correction capability. The outputs of the entropy encoders 330, 430 may be inserted into a bitstream e.g. by a multiplexer 508.

The H.264/AVC standard was developed by the Joint Video Team (JVT) of the Video Coding Experts Group (VCEG) of the Telecommunications Standardization Sector of International Telecommunication Unit (ITU-T) and the Moving Picture Experts Group (MPEG) of International Organisation for Standardization (ISO) / International Electrotechnical Commission (IEC). The H.264/AVC standard is published by both parent standardization organizations, and it is referred to as ITU-T Recommendation H.264 and ISO/IEC International Standard 14496-10, also known as MPEG-4 Part 10 Advanced Video Coding (AVC). There have been multiple versions of the H.264/AVC standard, integrating new extensions or features to the specification. These extensions include Scalable Video Coding (SVC) and Multiview Video Coding (MVC).

Version 1 of the High Efficiency Video Coding (H.265/HEVC a.k.a. HEVC (standard was developed by the Joint Collaborative Team - Video Coding (JCT-VC) of VCEG and MPEG. The standard was published by both parent standardization organizations, and it is referred to as ITU-T Recommendation H.265 and ISO/IEC International Standard 23008-2, also known as MPEG-H Part 2 High Efficiency Video Coding (HEVC). Version 2 of H.265/HEVC was published as ITU-T Recommendation H.265 (10/2014) and as Edition 2 of ISO/IEC 23008-2. There are currently ongoing standardization projects to develop further extensions to H.265/HEVC, including three-dimensional and screen content coding extensions, which may be abbreviated 3D-HEVC and SCC, respectively.

SHVC, MV-HEVC, and 3D-HEVC use a common basis specification, specified in Annex F of the version 2 of the HEVC standard. This common basis comprises for example high-level syntax and semantics, e.g. specifying some of the characteristics of the layers of the bitstream, such as inter-layer dependencies, as well as decoding processes, such as reference picture list construction including inter-layer reference pictures and picture order count derivation for multi-layer bitstream. Annex F may also be used in potential subsequent multi-layer extensions of HEVC. It is to be understood that even though a video encoder, a video decoder, encoding methods, decoding methods, bitstream structures, and/or embodiments may be described in the following with reference to specific extensions, such as SHVC and/or MV-HEVC, they are generally applicable to any multi-layer extensions of HEVC, and even more generally to any multi-layer video coding scheme.

Some key definitions, bitstream and coding structures, and concepts of H.264/AVC and HEVC are described in this section as an example of a video encoder, decoder, encoding method, decoding method and a bitstream structure, wherein the embodiments may be implemented. Some of the key definitions, bitstream and coding structures, and concepts of H.264/AVC are the same as in HEVC - hence, they are described below jointly. The aspects of the invention are not limited to H.264/AVC or HEVC, but rather the description is given for one possible basis on top of which the invention may be partly or fully realized.

Similarly to many earlier video coding standards, the bitstream syntax and semantics as well as the decoding process for error-free bitstreams are specified in H.264/AVC and HEVC. The encoding process is not specified, but encoders must generate conforming bitstreams. Bitstream and decoder conformance can be verified with the Hypothetical Reference Decoder (HRD). The standards contain coding tools that help in coping with transmission errors and losses, but the use of the tools in encoding is optional and no decoding process has been specified for erroneous bitstreams.

In the description of existing standards as well as in the description of example embodiments, a syntax element may be defined as an element of data represented in the bitstream. A syntax structure may be defined as zero or more syntax elements present together in the bitstream in a specified order. In the description of existing standards as well as in the description of example embodiments, a phrase "by external means" or "through external means" may be used.

For example, an entity, such as a syntax structure or a value of a variable used in the decoding process, may be provided "by external means" to the decoding process. The phrase "by external means" may indicate that the entity is not included in the bitstream created by the encoder, but rather conveyed externally from the bitstream for example using a control protocol. It may alternatively or additionally mean that the entity is not created by the encoder, but may be created for example in the player or decoding control logic or alike that is using the decoder. The decoder may have an interface for inputting the external means, such as variable values.

The elementary unit for the input to an H.264/AVC or HEVC encoder and the output of an H.264/AVC or HEVC decoder, respectively, is a picture. A picture given as an input to an encoder may also referred to as a source picture, and a picture decoded by a decoder may be referred to as a decoded picture.

The source and decoded pictures are each comprised of one or more sample arrays, such as one of the following sets of sample arrays:

- Luma (Y) only (monochrome).
- Luma and two chroma (YCbCr or YCgCo).
- Green, Blue and Red (GBR, also known as RGB).
- Arrays representing other unspecified monochrome or tri-stimulus color samplings (for example, YZX, also known as XYZ).

In the following, these arrays may be referred to as luma (or L or Y) and chroma, where the tow chroma arrays may be referred to as Cb and Cr; regardless of the actual color representation method in use. The actual color representation method in use can be indicated e.g. in a coded bitstream, e.g. using the Video Usability Information (VUI) syntax of H.264/AVC and/or HEVC. A component may be defined as an array or single sample from one of the three sample arrays (luma and two chroma) or the array or a single sample of the array that compose a picture in monochrome format.

In H.264/AVC and HEVC, a picture may either be a frame or a field. A frame comprises a matrix of luma samples and possibly the corresponding chroma samples. A field is a set of alternate sample rows of a frame and may be used as encoder input, when the source signal is interlaced. Chroma sample arrays may be absent (and hence monochrome sampling may be in use) or chroma sample arrays may be subsampled when compared to luma sample arrays. Chroma formats may be summarized as follows:

- In monochrome sampling there is only one sample arrays, which may be nominally considered the luma array.
- In 4:2:0 sampling, each of the two chroma arrays has half the height and half the width of the luma array.
- In 4:2:2 sampling, each of the two chroma arrays has the same height and half the width of the luma array.
- In 4:4:4 sampling, when no separate color planes are in use, each of the two chroma arrays has the same height and width as the luma array.

In H.264/AVC and HEVC, it is possible to code sample arrays as separate color planes into the bitstream and respectively decode separately coded color planes from the bitstream. When separate color planes are in use, each one of them is separately processed (by the encoder and/or the decoder) as a picture with monochrome sampling.

A partitioning may be defined as a division of a set into subsets such that each element of the set is in exactly one of the subsets.

In H.264/AVC, a macroblock is a 16x16 block of luma samples and the corresponding blocks of chroma samples. For example, in the 4:2:0 sampling pattern, a macroblock contains one 8x8 block of chroma samples per each chroma component. In H.264/AVC, a picture is partitioned to one or more slice groups, and a slice group contains one or more slices. In H.264/AVC, a slice consists of an integer number of macroblocks ordered consecutively in the raster scan within a particular slice group.

When describing the operation of HEVC encoding and/or decoding, the following terms may be used. A coding block may be defined as an NxN block of samples for some value of N such that the division of a coding tree block into coding blocks is a partitioning. A coding tree block (CTB) may be defined as an NxN block of samples for some value of N such that the division of a component into coding tree blocks is a partitioning. A coding tree unit (CTU) may be defined as a coding tree block of luma samples, two corresponding coding tree blocks of chroma samples of a picture that has three sample arrays, or a coding tree block of samples of a monochrome picture or a picture that is coded using three separate color planes and syntax structures used to code the samples. A coding unit (CU) may be defined as a coding block of luma samples, two corresponding coding blocks of chroma samples of a picture that has three sample arrays, or a coding block of samples of a monochrome picture or a picture that is coded using three separate color planes and syntax structures used to code the samples.

In some video codecs, such as High Efficiency Video Coding (HEVC) codec, video pictures are divided into coding units (CU) covering the area of the picture. A CU consists of one or more prediction units (PU) defining the prediction process for the samples within the CU and one or more transform units (TU) defining the prediction error coding process for the samples in the said CU. Typically, a CU consists of a square block of samples with a size selectable from a predefined set of possible CU sizes. A CU with the maximum allowed size may be named as LCU (largest coding unit) or coding tree unit (CTU) and the video picture is divided into non-overlapping LCUs. An LCU can be further split into a combination of smaller CUs, e.g. by recursively splitting the LCU and resultant CUs. Each resulting CU typically has at least one PU and at least one TU associated with it. Each PU and TU can be further split into smaller PUs and TUs in order to increase granularity of the prediction and prediction error coding processes, respectively. Each PU has prediction information associated with it defining what kind of a prediction is to be applied for the pixels within that PU (e.g. motion vector information for inter predicted PUs and intra prediction directionality information for intra predicted PUs).

Each TU can be associated with information describing the prediction error decoding process for the samples within the said TU (including e.g. DCT coefficient information). It may be signaled at CU level whether prediction error coding is applied or not for each CU. In the case there is no prediction error residual associated with the CU, it can be considered there are not TUs for the said CU. The division of the image into CUs, and division of CUs into PUs and TUs may be signaled in the bitstream allowing the decoder to reproduce the intended structure of these units.

In HEVC, a picture can be partitioned in tiles, which are rectangular and contain an integer number of LCUs. In HEVC, the partitioning to tiles forms a grid comprising one or more tile columns and one or more tile rows. A coded tile is byte-aligned, which may be achieved by adding byte-alignment bits at the end of the coded tile.

In HEVC, the partitioning to tiles forms a regular grid, where heights and widths of tiles differ from each other by one LCU at the maximum. In HEVC, a slice is defined to be an integer number of coding tree units contained in one independent slice segment and all subsequent dependent slice segments (if any) that precede the next independent slice segment (if any) within the same access unit. In HEVC, a slice segment is defined to be an integer number of coding tree units ordered consecutively in the tile scan and contained in a single NAL unit. The division of each picture into slice segments is a partitioning. In HEVC, an independent slice segment is defined to be a slice segment for which the values of the syntax elements of the slice segment header are not inferred from the values for a preceding slice segment, and a dependent slice segment is defined to be a slice segment for which the values of some syntax elements of the slice segment header are inferred from the values for the preceding independent slice segment in decoding order. In HEVC, a slice header is defined to be the slice segment header of the independent slice segment that is current slice segment or is the independent slice segment that precedes a current dependent slice segment, and a slice segment header is defined to be a part of a coded slice segment containing the data elements pertaining to the first or all coding tree units represented in the slice segment. The CUs are scanned in the raster scan order of LCUs within tiles or within a picture, if tiles are not in use. Within an LCU, CUs have a specific scan order.

In HEVC, a tile contains an integer number of coding tree units, and may consist of coding tree units contained in more than one slice. Similarly, a slice may consist of coding tree units contained in more than one tile. In HEVC, all coding tree units in a slice belong to the same tile and/or all coding tree units in a tile belong to the same slice. Furthermore, in HEVC, all coding tree units in a slice segment belong to the same tile and/or all coding tree units in a tile belong to the same slice segment.

A motion-constrained tile set is such that the inter prediction process is constrained in encoding such that no sample value outside the motion-constrained tile set, and no sample value at a fractional sample position that is derived using one or more sample values outside the motion-constrained tile set, is used for inter prediction of any sample within the motion-constrained tile set.

It is noted that sample locations used in inter prediction are saturated so that a location that would be outside the picture otherwise is saturated to point to the corresponding boundary sample of the picture. Hence, if a tile boundary is also a picture boundary, motion vectors may effectively cross that boundary or a motion vector may effectively cause fractional sample interpolation that would refer to a location outside that boundary, since the sample locations are saturated onto the boundary.

The temporal motion-constrained tile sets SEI message of HEVC can be used to indicate the presence of motion-constrained tile sets in the bitstream.

An inter-layer constrained tile set is such that the inter-layer prediction process is constrained in encoding such that no sample value outside each associated reference tile set, and no sample value at fractional sample position that is derived using one of more sample values outside each associated reference tile set, is used for inter-layer prediction of any sample within the inter-layer constrained tile set.

The inter-layer constrained tile sets SEI message of HEVC can be used to indicate the presence of inter-layer constrained tile sets in the bitstream.

The decoder reconstructs the output video by applying prediction means similar to the encoder to form a predicted representation of the pixel blocks (using the motion or spatial information created by the encoder and stored in the compressed representation) and prediction error decoding (inverse operation of the prediction error coding recovering the quantized prediction error signal in spatial pixel domain). After applying prediction and prediction error decoding means the decoder sums up the prediction and prediction error signals (pixel values) to form the output video frame. The decoder (and encoder) can also apply additional filtering means to improve the quality of the output video before passing it for display and/or storing it as prediction reference for the forthcoming frames in the video sequence.

The filtering may for example include one or more of the following: deblocking, sample adaptive offset (SAO), and/or adaptive loop filtering (ALF). H.264/AVC includes a deblocking, whereas HEVC includes both deblocking and SAO.

In typical video codecs the motion information is indicated with motion vectors associated with each motion compensated image block, such as a prediction unit. Each of these motion vectors represents the displacement of the image block in the picture to be coded (in the encoder side) or decoded (in the decoder side) and the prediction source block in one of the previously coded or decoded pictures. In order to represent motion vectors efficiently, those may be coded differentially with respect to block specific predicted motion vectors. In typical video codecs, the predicted motion vectors are created in a predefined way, for example calculating the median of the encoded or decoded motion vectors of the adjacent blocks. Another way to create motion vector predictions is to generate a list of candidate predictions from adjacent blocks and/or co-located blocks in temporal reference pictures and signaling the choses candidate as the motion vector predictor. In addition to predicting the motion vector values, it can be predicted which reference picture(s) are used for motion-compensated prediction and this prediction information may be represented for example by a reference index of previously coded/decoded picture. The reference index is typically predicted from adjacent blocks and/or co-located blocks in temporal reference picture. Moreover, typical high efficiency video codecs employ an additional motion information coding/decoding mechanism, often called merging/merge mode, where all the motion field information, which includes motion vector and corresponding reference picture index for each available reference picture list, is predicted and used without any modification/correction. Similarly, predicting the motion field information is carried out using the motion field information of adjacent blocks and/or co-located blocks in temporal reference pictures and the used motion field information is signaled among a list of motion field candidate list filled with motion field information of available adjacent/co-located blocks.

Typical video codecs enable the use of uni-prediction, where a single prediction block is used for a block being (de)coded, and bi-prediction, where two prediction blocks are combined to form the prediction for a block being (de)coded. Some video codecs enable weighted prediction, where the sample values of the prediction blocks are weighted prior to adding residual information. For example, multiplicative weighting factor and an additive offset which can be applied. In explicit weighted prediction, enabled by some video codecs, a weighting factor and offset may be coded for example in the slice header for each allowable reference picture index. In implicit weighted prediction, enabled by some video codecs, the weighting factors and/or offsets are not coded but are derived e.g. based on the relative picture order count (POC) distances of the reference pictures.

In typical video codecs the prediction residual after motion compensation is first transformed with a transform kernel (like DCT) and then coded. The reason for this is that often there still exists some correlation among the residual and transform can in many cases help reduce this correlation and provide more efficient coding.

Typical video encoders utilize Lagrangian cost functions to find optimal coding modes, e.g. the desired Macroblock mode and associated motion vectors. This kind of cost function uses a weighting factor $\lambda$ to tie together the (exact or estimated) image distortion due to lossy coding methods and the (exact or estimated) amount of information that is required to represent the pixel values in and image area:

$$C = D + \lambda R \qquad (1)$$

where C is the Lagrangian cost to be minimized, D is the image distortion (e.g. Mean Squared Error) with the mode and motion vectors considered, and R the number of bits needed to represent the required data to reconstruct the image block in the decoder (including the amount of data to represent the candidate motion vectors).

Video coding standards and specifications may allow encoders to divide a coded picture to coded slices or alike. In-picture prediction is typically disabled across slice boundaries. Thus, slices can be regarded as a way to split a coded picture to independently decodable pieces. In H.264/AVC and HEVC, in-picture prediction may be disabled across slice boundaries. Thus, slices can be regarded as a way to split a coded picture into independently decodable pieces, and slices are therefore often regarded as elementary units for transmission. In many cases, encoders may indicate in the bitstream which types of in-picture prediction are turned off across slice boundaries, and the decoder operation takes this information into account for example when concluding which prediction sources are available. For example, samples from a neighbouring macroblock or CU may be regarded as unavailable for intra prediction, if the neighboring macroblock or CU resides in a different slice.

An elementary unit for the output of an H.264/AVC or HEVC encoder and the input of an H.264/AVC or HEVC decoder, respectively, is a Network Abstraction Layer (NAL) unit. For transport over packet-oriented networks or storage into structured files, NAL units may be encapsulated into packets or similar structures. A NAL unit may be defined as a syntax structure containing an indication of the type of data to follow and bytes containing that data in the form of an RBSP interspersed as necessary with startcode emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0. NAL units consist of a header and payload.

In HEVC, a two-byte NAL unit header is used for all specified NAL unit types. The NAL unit header contains one reserved bit, a six-bit NAL unit type indication, a threebit nuh_temporal_id_plus1 indication for temporal level (may be required to be greater than or equal to 1) and a six-bit nuh_layer_id syntax element. The temporal_id_plues1 syntax element may be regarded as a temporal identifier for the NAL unit, and a zero-based *TemporalId* variable may be derived as follows: *TemporalId=temporal_id_plus1 - 1*. TemporalId equal to zero corresponds to the lower temporal level. The value of temporal_id_plus1 is required to be non-zero in order to avoid start code emulation involving the two NAL unit header bytes. The bitstream created by excluding all VCL NAL units having a TemporalId greater than or equal to a selected value and including all other VCL NAL units remains conforming. Consequently, a picture having TemporalId equal to TID does not use any picture having a TemporalId greater than TID as inter prediction reference. A sub-layer or a temporal sub-layer may be defined to be a temporal scalable layer of a temporal scalable bitstream, consisting of VCL NAL units with a particular value of the TemporalId variable and the associated non-VCL NAL units. nuh_layer_id can be understood as a scalability layer identifier.

NAL units can be categorized into Video Coding Layer (VCL) NAL units and non-VCL NAL units. In H.264/AVC, coded slice NAL units contain syntax elements representing one or more coded macroblocks, each of which corresponds to a block of samples in the uncompressed picture. In HEVC, VCL NAL units contain syntax elements representing one or more CU.

In HEVC, a coded slice NAL unit can be indicated to be one of the following types:

| nal_unit_type | Name of nal_unit_type | Content of NAL unit and RBSP syntax structure |
|---|---|---|
| 0,<br>1 | TRAIL_N,<br>TRAIL_R | Coded slice segment of a non-TSA, non-STSA trailing picture<br>slice_segment_layer_rbsp( ) |
| 2,<br>3 | TSA_N,<br>TSA_R | Coded slice segment of a TSA picture<br>slice_segment_layer_rbsp( ) |
| 4,<br>5 | STSA_N,<br>STSA_R | Coded slice segment of an STSA picture<br>slice_layer_rbsp( ) |
| 6,<br>7 | RADL_N,<br>RADL_R | Coded slice segment of a RADL picture<br>slice_layer_rbsp( ) |
| 8,<br>9 | RASL_N,<br>RASL_R, | Coded slice segment of a RASL picture<br>slice_layer_rbsp( ) |
| 10,<br>12,<br>14 | RSV_VCL_N10<br>RSV_VCL_N12<br>RSV_VCL_N14 | Reserved // reserved non-RAP non-reference VCL NAL unit types |
| 11,<br>13,<br>15 | RSV_VCL_R11<br>RSV_VCL_R13<br>RSV_VCL_R15 | Reserved // reserved non-RAP reference VCL NAL unit types |
| 16,<br>17,<br>18 | BLA_W_LP<br>IDR_W_RADL<br>BLA_N_LP | Coded slice segment of a BLA picture<br><br>slice_segment_layer_rbsp( ) |
| 19,<br>20 | IDR_W_RADL<br>IDR_N_LP | Coded slice segment of an IDR picture<br><br>slice_segment_layer_rbsp( ) |
| 21 | CRA_NUT | Coded slice segment of a CRA picture<br>slice_segment_layer_rbsp( ) |
| 22,<br>23 | RSV_IRAP_VCL22..<br>RSV_IRAP_VCL23 | Reserved // reserved RAP VCL<br>NAL unit types |

(continued)

| nal_unit_type | Name of nal_unit_type | Content of NAL unit and RBSP syntax structure |
|---|---|---|
| 24..31 | RSV_VCL24.. RSV_VCL31 | Reserved // reserved non-RAP VCL NAL unit types |

In HEVC, abbreviations for picture types may be defined as follows: trailing (TRAIL) picture, Temporal Sub-layer Access (TSA), Step-wise Temporal Sub-layer Access (STSA), Random Access Decodable Leading (RADL) picture, Random Access Skipped Leading (RASL) picture, Broken Link Access (BLA) picture, Instantaneous Decoding Refresh (IDR) picture, Clean Random Access (CRA) picture.

A Random Access Point (RAP) picture, which may also be referred to as an intra random access point (IRAP) picture, is a picture where each slice or slice segment has nal_unit_type in the range of 16 to 23, inclusive. A IRAP picture in an independent layer does not refer to any pictures other than itself for inter prediction in its decoding process. When no intra block copy is in use, an IRAP picture in an independent layer contains only intra-coded slices. An IRAP picture belonging to a predicted layer with nuh_layer_id value currLayerId may contain P, B, and I slices, cannot use inter prediction from other picture with nuh_layer_id equal to currLayerId, and may use inter-layer prediction from its direct reference layers. In the present version of HEVC, an IRAP picture may be a BLA picture, a CRA picture or an IDR picture. The first picture in a bitstream containing a base layer is an IRAP picture at the base layer. Provided the necessary parameter sets are available when they need to be activated, an IRAP picture at an independent layer and all subsequent non-RASL picture at the independent layer in decoding order can be correctly decoded without performing the decoding process of any picture that precede the IRAP picture in decoding order. The IRAP picture belonging to a predicted layer with nuh_layer_id value currLayerId and all subsequent non-RASL pictures with nuh_layer_id equal to currLayerId in decoding order can be correctly decoded without performing the decoding process of any pictures with nuh_layer_id equal to currLayerId that precede the IRAP picture in decoding order, when the necessary parameter sets are available when they need to be activated and when the decoding of each direct reference layer of the layer with nuh_layer_id equal to currLayerId has been initialized (i.e. when LayerInitializedFlag[ refLayerId ] is equal to 1 for refLayerId equal to all nuh_layer_id values of the direct reference layers of the layer with nuh_layer_id equal to currLayerId). There may be pictures in a bitstream that contain only intra-coded slices that are not IRAP pictures.

In HEVC a CRA picture may be the first picture in the bitstream in decoding order, or may appear later in the bitstream. CRA pictures in HEVC allow so-called leading pictures that follow the CRA picture in decoding order but precede it in output order. Some of the leading pictures, so-called RASL picture, may use pictures decoded before the CRA picture as a reference. Pictures that follow a CRA picture in both decoding and output order are decodable if random access is performed at the CRA picture, and hence clean random access is achieved similarly to the clean random access functionality of an IDR picture.

A CRA picture may have associated RADL or RASL pictures. When a CRA picture is the first picture in the bitstream in decoding order, the CRA picture is the first picture of a coded video sequence in decoding order, and any associated RASL pictures are not output by the decoder and may not be decodable, as they may contain references to pictures that are not present in the bitstream.

A leading picture is a picture that precedes the associated RAP picture in output order. The associated RAP picture is the previous RAP picture in decoding order (if present). A leading picture is either a RADL picture or a RASL picture.

All RASL pictures are leading pictures of an associated BLA or CRA picture. When the associated RAP picture is a BLA picture or is the first coded picture in the bitstream, the RASL picture is not output and may not be correctly decodable, as the RASL picture may contain references to pictures that are not present in the bitstream. However, a RASL picture can be correctly decoded if the decoding had started from a RAP picture before the associated RAP picture of the RASL picture. RASL pictures are not used as reference pictures for the decoding process of non-RASL pictures. When present, all RASL pictures precede, in decoding order, all trailing pictures of the same associated RAP picture. In some drafts of the HEVC standard, a RASL picture was referred to a Tagged for Discard (TFD) picture.

All RADL pictures are leading pictures. RADL pictures are not used as reference pictures for the decoding process of trailing pictures of the same associated RAP picture. When present, all RADL pictures precede, in decoding order, all trailing pictures of the same associated RAP picture. RADL pictures do not refer to any picture preceding the associated RAP picture in decoding order and can therefore be correctly decoded when the decoding starts from the associated RAP picture.

When a part of a bitstream starting from a CRA picture is included in another bitstream, the RASL pictures associated with the CRA picture might not be correctly decodable, because some of their reference pictures might not be present in the combined bitstream. To make such a splicing operation straightforward, the NAL unit type of the CRA picture can be changed to indicate that it is a BLA picture. The RASL pictures associated with a BLA picture may not be correctly decodable hence are not be output/displayed. Furthermore, the RASL pictures associated with a BLA picture may be omitted from decoding.

A BLA picture may be the first picture in the bitstream in decoding order, or may appear later in the bitstream. Each BLA picture begins a new coded video sequence, and has similar effect on the decoding process as an IDR picture. However, a BLA picture contains syntax elements that specify a non-empty reference picture set.

When a BLA picture has nal_unit_type equal to BLA_W_LP, it may have associated RASL pictures, which are not output by the decoder and may not be decodable, as they may contain references to pictures that are not present in the bitstream. When a BLA picture has nal_unit_type equal to BLA_W_LP, it may also have associated RADL pictures, which are specified to be decoded. When a BLA picture has nal_unit_type equal to BLA_W_RADL, it does not have associated RASL pictures but may have associated RADL pictures, which are specified to be decoded. When a BLA picture has nal_unit_type equal to BLA_N_LP, it does not have any associated leading pictures.

An IDR picture having nal_unit_type equal to IDR_N_LP does not have associated leading pictures present in the bitstream. An IDR picture having nal_unit_type equal to IDR_W_LP does not have associated RASL pictures present in the bitstream, but may have associated RADL pictures in the bitstream.

When the value of nal_unit_type is equal to TRAIL_N, TSA_N, STSA_N, RADL_N, RASL_N, RSV_VCL_N10, RSV_VCL_N12, or RSV_VCL_N14, the decoded picture is not used as a reference for any other picture of the same temporal sub-layer. That is, in HEVC, when the value of nal_unit_type is equal to TRAIL_N, TSA_N, STSA_N, RADL_N, RASL_N, RSV_VCL_N10, RSV_VCL_N12, or RSV_VCL_N14, the decoded picture is not included in any of the Ref-PicSetStCurrBefore, RefPicSetStCurrAfter and RefPicSetLtCurr of any picture with the same value of TemporalId. A coded picture with nal_unit_type equal to TRAIL_N, TSA_N, STSA_N, RADL_N, RASL_N, RSV VCL_N10, RSV_VCL_N12, or RSV_VCL_N14 may be discarded without affecting the decodability of other pictures with the same value of TemporalId.

A trailing picture may be defined as a picture that follows the associated RAP picture in output order. Any picture that is a trailing picture does not have nal_unit_type equal to RADL_N, RADL_R, RASL_N or RASL_R. Any picture that is a leading picture may be constrained to precede, in decoding order, all trailing pictures that are associated with the same RAP picture. No RASL pictures are present in the bitstream that are associated with a BLA picture having nal_unit_type equal to BLA_W_RADL or BLA_N_LP. No RADL pictures are present in the bitstream that are associated with a BLA picture having nal_unit_type equal to BLA_N_LP or that are associated with an IDR picture having nal_unit_type equal to IDR_N_LP. Any RASL picture associated with the CRA or BLA picture may be constrained to precede any RADL picture associated with the CRA or BLA picture in output order.

Any RASL picture associated with a CRA picture may be constrained to follow, in output order, any other RAP picture that precedes the CRA picture in decoding order.

In HEVC there are two picture types, the TSA and STSA picture types that can be used to indicate temporal sub-layer switching points. If temporal sub-layers with TemporalId up to N had been decoded until the TSA or STSA picture (exclusive) and the TSA or STSA picture has TemporalId equal to N+1, the TSA or STSA picture enables decoding of all subsequent pictures (in decoding order) having TemporalId equal to N+1. The TSA picture type may impose restrictions on the TSA picture itself and all pictures in the same sub-layer that follow the TSA picture in decoding order. None of these pictures is allowed to use inter prediction from any picture in the same sub-layer that precedes the TSA picture in decoding order. The TSA definition may further impose restrictions on the pictures in higher sub-layers that follow the TSA picture in decoding order. None of these picture is allowed to refer a picture that precedes the TSA picture in decoding order if that picture belongs to the same or higher sub-layer as the TSA picture. TSA pictures have TemporalId greater than 0. The STSA is similar to the TSA picture but does not impose restrictions on the pictures in higher sub-layers that follow the STSA picture in decoding order and hence enable upswitching only onto the sub-layer where the STSA picture resides.

A non-VCL NAL unit may be for example one of the following types: a sequence parameter set, a picture parameter set, a supplemental enhancement information (SEI) NAL unit, an access unit delimiter, an end of sequence NAL unit, an end of bitstream NAL unit, or a filler data NAL unit. Parameter sets may be needed for the reconstruction of decoded pictures, whereas many of the other non-VCL NAL units are not necessary for the reconstruction of decoded sample values.

Parameters that remain unchanged through a coded video sequence may be included in a sequence parameter set. In addition to the parameters that may be needed by the decoding process, the sequence parameter set may optionally contain video usability information (VUI), which includes parameters that may be important for buffering, picture output timing, rendering, and resource reservation. In HEVC a sequence parameter set RBSP includes parameters that can be referred to by one or more picture parameter set RBSPs or one or more SEI NAL units containing a buffering period SEI message. A picture parameter set contains such parameters that are likely to be unchanged in several coded pictures. A picture parameter set RBSP may include parameters that can be referred to by the coded slice NAL units of one or more coded pictures.

In HEVC, a video parameter set (VPS) may be defined as a syntax structure containing syntax elements that apply to zero or more entire coded video sequences as determined by the content of a syntax element found in the SPS referred to by a syntax element found in the PPS referred to by a syntax element found in each slice segment header. A video parameter set RBSP may include parameters that can be referred to by one or more sequence parameter set RBSPs.

The relationship and hierarchy between video parameter set (VPS), sequence parameter set (SPS), and picture parameter set (PPS) may be described as follows. VPS resides one level above SPS in the parameter set hierarchy and in the context of scalability and/or 3D video. VPS may include parameters that are common for all slices across all (scalability or view) layers in the entire coded video sequence. SPS includes the parameters that are common for all slices in a particular (scalability or view) layer in the entire coded video sequence, and may be shared by multiple (scalability or view) layers. PPS includes the parameters that are common for all slices in a particular layer representation (the representation of one scalability or view layer in one access unit) and are likely to be shared by all slices in multiple layer representations.

VPS may provide information about the dependency relationships of the layers in a bitstream, as well as many other information that are applicable to all slices across all (scalability or view) layers in the entire coded video sequence. VPS may be considered to comprise two parts, the base VPS and a VPS extension, where the VPS extension may be optionally present. In HEVC, the base VPS may be considered to comprise the video_parameter_set_rbsp( ) syntax structure without the vps_extension() syntax structure. The video_parameter_set_rbsp( ) syntax structure was primarily specified already for HEVC version 1 and includes syntax elements which may be of use for base layer decoding. In HEVC, the VPS extension may be considered to comprise the vps_extension() syntax structure. The vps_extension( ) syntax structure was specified in HEVC version 2 primarily for multi-layer extensions and comprises syntax elements which may be of use for decoding of one or more non-base layers, such as syntax elements indicating layer dependency relations.

The syntax element max_tid_il_ref_pics_plus1 in the VPS extension can be used to indicate that non-IRAP pictures are not used a reference for inter-layer prediction and, if not so, which temporal sub-layers are not used as a reference for inter-layer prediction:

max_tid_il_ref_pics_plus1 [ i ][ j ] equal to 0 specifies that non-IRAP pictures with nuh_layer_id equal to layer_id_in_nuh[ i ] are not used as source pictures for inter-layer prediction for pictures with nuh_layer_id equal to layer_id_in_nuh[ j ].

max_tid_il_ref_pics_plus1[ i ][ j ] greater than 0 specifies that pictures with nuh_layer_id equal to layer_id_in_nuh[ i ] and TemporalId greater than max_tid-il_ref_pics_plus1[ i ][ j ] - 1 are not used as source pictures for inter-layer prediction for pictures with nuh_layer_id equal to layer_id_in_nuh[ j ]. When not present, the value of max_tid_il_ref_pics_plus1[ i ][ j ] is inferred to be equal to 7.

H.264/AVC and HEVC syntax allows many instances of parameter sets, and each instance is identified with a unique identifier. In order to limit the memory usage needed for parameter sets, the value range for parameter set identifiers has been limited. In H.264/AVC and HEVC, each slice header includes the identifier of the picture parameter set that is active for the decoding of the picture that contains the slice, and each picture parameter set contains the identifier of the active sequence parameter set. Consequently, the transmission of picture and sequence parameter sets does not have to be accurately synchronized with the transmission of slices. Instead, it is sufficient that the active sequence and picture parameter sets are received at any moment before they are referenced, which allows transmission of parameter sets "out-of-band" using a more reliable transmission mechanism compared to the protocols used for the slice data. For example, parameter sets can be included as a parameter in the session description for Real-time Transport Protocol (RTP) sessions. If parameter sets are transmitted in-band, they can be repeated to improve error robustness.

Out-of-band transmission, signalling or storage can additionally or alternatively be used for other purposes than tolerance against transmission errors, such as ease of access or session negotiation. For example, a sample entry of a track in a file conforming to the ISOBMFF may comprise parameter sets, while the coded data in the bitstream is stored elsewhere in the file or in another file. The phrase along the bitstream (e.g. indicating along the bitstream) may be used in claims and described embodiments to refer to out-of-band transmission, signalling, or storage in a manner that the out-of-band data is associated with the bitstream. The phrase decoding along the bitstream or alike may refer to decoding the referred out-of-band data (which may be obtained from out-of-band transmission, signalling, or storage) that is associated with the bitstream. A coded picture is a coded representation of a picture.

In HEVC, a coded picture may be defined as a coded representation of a picture containing all coding tree units of the picture. In HEVC, an access unit (AU) may be defined as a set of NAL units that are associated with each other according to a specified classification rule, are consecutive in decoding order, and contain at most one picture with any specific value of nuh_layer_id. In addition to containing the VCL NAL units of the coded picture, an access unit may also contain non-VCL NAL units.

It may be required that coded pictures appear in certain order within an access unit. For example a coded picture with nuh_layer_id equal to nuhLayerIdA may be required to precede, in decoding order, all coded pictures with nuh_layer_id greater than nuhLayerIdA in the same access unit. An AU typically contains all the coded pictures that represent the same output time and/or capturing time.

A bitstream may be defined as a sequence of bits, in the form of a NAL unit stream or a byte stream, that forms the representation of coded pictures and associated data forming one or more coded video sequences. A first bitstream may be followed by a second bitstream in the same logical channel, such as in the same file or in the same connection of a communication protocol. An elementary stream (in the context of video coding) may be defined as a sequence of one or more bitstreams. The end of the first bitstream may be indicated by a specific NAL unit, which may be referred to as the end of bitstream (EOB) NAL unit and which is the last NAL unit of the bitstream. In HEVC and its current draft extensions, the EOB NAL unit is required to have nuh_layer_id equal to 0.

A byte stream format has been specified in H.264/AVC and HEVC for transmission or storage environments that do not provide framing structures. The byte stream format separates NAL units from each other by attaching a start code in front of each NAL unit. To avoid false detection of NAL unit boundaries, encoders run a byteoriented start code emulation prevention algorithm, which adds an emulation prevention byte to the NAL unit payload if a start code would have occurred otherwise. In order to, for example, enable straightforward gateway operation between packet- and stream-oriented systems, start code emulation prevention may always be performed regardless of whether the byte stream format is in use or not. The bit order for the byte stream format may be specified to start with the most significant bit (MSB) of the first byte, proceed to the least significant bit (LSB) of the first byte, followed by the MSB of the second byte, etc. The byte stream format may be considered to consist of a sequence of byte stream NAL unit syntax structures. Each byte stream NAL unit syntax structure may be considered to contain one start code prefix followed by one NAL unit syntax structure, i.e. the nal_unit( NumBytesInNalUnit ) syntax structure if syntax element names are referred to. A byte stream NAL unit may also contain an additional zero_byte syntax element. It may also contain one or more additional trailing_zero_8bits syntax elements. When a byte stream NAL unit is the first byte stream NAL unit in the bitstream, it may also contain one or more additional leading_zero_8bits syntax elements. The syntax of a byte stream NAL unit may be specified as follows:

| byte_stream_nal_unit( NumBytesInNalUnit ) { | Descripto r |
|---|---|
| while( next_bits( 24 ) != 0x000001 && next_bits( 32 ) != 0x00000001 ) | |
| **leading_zero_8bits** /* equal to 0x00 */ | f(8) |
| if( next_bits( 24 ) != 0x000001 ) | |
| **zero_byte** /* equal to 0x00 */ | f(8) |
| **start_code_prefix_one_3bytes** /* equal to 0x000001 */ | f(24) |
| nal_unit( NumBytesInNalUnit) | |
| while( more_data_in_byte_stream( ) && next_bits( 24 ) != 0x000001 && next_bits( 32 ) != 0x00000001 ) | |
| **trailing_zero_8bits** /* equal to 0x00 */ | f(8) |
| } | |

The order of byte stream NAL units in the byte stream may be required to follow the decoding order of the NAL units contained in the byte stream NAL units. The semantics of syntax elements may be specified as follows. leading_zero_8bits is a byte equal to 0x00. The leading_zero_8bits syntax element can only be present in the first byte stream NAL unit of the bitstream, because any bytes equal to 0x00 that follow a NAL unit syntax structure and precede the four-byte sequence 0x00000001 (which is to be interpreted as a zero_byte followed by a start code_prefix one 3bytes) will be considered to be trailing_zero_8bits syntax elements that are part of the preceding byte stream NAL unit. zero_byte is a single byte equal to 0x00. start code_prefix one 3bytes is a fixed-value sequence of 3 bytes equal to 0x000001. This syntax element may be called a start code prefix (or simply a start code). trailing_zero_8bits is a byte equal to 0x00.

A NAL unit may be defined as a syntax structure containing an indication of the type of data to follow and bytes containing that data in the form of an RBSP interspersed as necessary with emulation prevention bytes. A raw byte sequence payload (RBSP) may be defined as a syntax structure containing an integer number of bytes that is encapsulated in a NAL unit. An RBSP is either empty or has the form of a string of data bits containing syntax elements followed by an RBSP stop bit and followed by zero or more subsequent bits equal to 0.

NAL units consist of a header and payload. In H.264/AVC and HEVC, the NAL unit header indicates the type of the NAL unit.

The HEVC syntax of the nal_unit( NumBytesInNalUnit ) syntax structure is provided next as an example of syntax of NAL unit.

| nal_unit( NumBytesInNalUnit) { | **Descrip tor** |
|---|---|
|    nal_unit_header( ) | |
|    NumBytesInRbsp = 0 | |
|    for( i = 2; i < NumBytesInNalUnit; i++ ) | |
|      if( i + 2 < NumBytesInNalUnit && next_bits( 24 ) = = 0x000003 ) { | |
|        **rbsp_byte**[ NumBytesInRbsp++ ] | b(8) |
|        **rbsp_byte**[ NumBytesInRbsp++ ] | b(8) |
|        i+=2 | |
|        **emulation_prevention_three_byte** /* equal to 0x03 */ | f(8) |
|      } else | |
|        **rbsp_byte[** NumBytesInRbsp++ ] | b(8) |
| } | |

In HEVC, a coded video sequence (CVS) may be defined, for example, as a sequence of access units that consists, in decoding order, of an IRAP access unit with NoRaslOutputFlag equal to 1, followed by zero or more access units that are not IRAP access units with NoRaslOutputFlag equal to 1, including all subsequent access units up to but not including any subsequent access unit that is an IRAP access unit with NoRaslOutputFlag equal to 1. An IRAP access unit may be defined as an access unit in which the base layer picture is an IRAP picture. The value of NoRaslOutputFlag is equal to 1 for each IDR picture, each BLA picture, and each IRAP picture that is the first picture in that particular layer in the bitstream in decoding order, is the first IRAP picture that follows an end of sequence NAL unit having the same value of nuh_layer_id in decoding order. In multi-layer HEVC, the value of NoRaslOutputFlag is equal to 1 for each IRAP picture when its nuh_layer_id is such that LayerInitializedFlag[ nuh_layer_id ] is equal to 0 and LayerInitializedFlag[ refLayerId ] is equal to 1 for all values of refLayerId equal to IdDirectRefLayer[ nuh_layer_id ][ j ], where j is in the range of 0 to NumDirectRefLayers[ nuh_layer_id ] - 1, inclusive. Otherwise, the value of NoRaslOutputFlag is equal to HandleCraAsBlaFlag. NoRaslOutputFlag equal to 1 has an impact that the RASL pictures associated with the IRAP picture for which the NoRaslOutputFlag is set are not output by the decoder. There may be means to provide the value of HandleCraAsBlaFlag to the decoder from an external entity, such as a player or a receiver, which may control the decoder. HandleCraAsBlaFlag may be set to 1 for example by a player that seeks to a new position in a bitstream or tunes into a broadcast and starts decoding and then starts decoding from a CRA picture. When Handle-CraAsBlaFlag is equal to 1 for a CRA picture, the CRA picture is handled and decoded as if it were a BLA picture.

In HEVC, a coded video sequence may additionally or alternatively (to the specification above) be specified to end, when a specific NAL unit, which may be referred to as an end of sequence (EOS) NAL unit, appears in the bitstream and has nuh_layer_id equal to 0.

A group of pictures (GOP) and its characteristics may be defined as follows. A GOP can be decoded regardless of whether any previous pictures were decoded. An open GOP is such a group of pictures in which pictures preceding the initial intra picture in output order might not be correctly decodable when the decoding starts from the initial intra picture of the open GOP. In other words, pictures of an open GOP may refer (in inter prediction) to pictures belonging to a previous GOP. An HEVC decoder can recognize an intra picture starting an open GOP, because a specific NAL unit type, CRA NAL unit type, may be used for its coded slices. A closed GOP is such a group of pictures in which all pictures can be correctly decoded when the decoding starts from the initial intra picture of the closed GOP. In other words, no picture in a closed GOP refers to any pictures in previous GOPs. In H.264/AVC and HEVC, a closed GOP may start from an IDR picture. In HEVC a closed GOP may also start from a BLA_W_RADL or a BLA_N_LP picture. An open GOP coding structure is potentially more efficient in the compression compared to a closed GOP coding structure, due to a larger flexibility in selection of reference pictures.

A Structure of Pictures (SOP) may be defined as one or more coded pictures consecutive in decoding order, in which the first coded picture in decoding order is a reference picture at the lowest temporal sub-layer and no coded picture except potentially the first coded picture in decoding order is a RAP picture. All pictures in the previous SOP precede in decoding order all pictures in the current SOP and all pictures in the next SOP succeed in decoding order all pictures in the current SOP. A SOP may represent a hierarchical and repetitive inter prediction structure. The term group of pictures (GOP) may sometimes be used interchangeably with the term SOP and having the same semantics as the semantics of SOP.

The bitstream syntax of H.264/AVC and HEVC indicates whether a particular picture is a reference picture for inter prediction of any other picture. Pictures of any coding type (I, P, B) can be reference pictures or non-reference pictures in H.264/AVC and HEVC.

In HEVC, a reference picture set (RPS) syntax structure and decoding process are used. A reference picture set valid or active for a picture includes all the reference pictures used as reference for the picture and all the reference pictures that are kept marked as "used for reference" for any subsequent pictures in decoding order. There are six subsets of the reference picture set, which are referred to as namely RefPicSetStCurr0 (a.k.a. RefPicSetStCurrBefore), RefPicSetStCurr1 (a.k.a. RefPicSetStCurrAfter), RefPicSetStFoll0, RefPicSetStFoll1, RefPicSetLtCurr, and RefPicSetLtFoll. RefPicSetStFoll0 and RefPicSetStFoll1 may also be considered to form jointly one subset RefPicSetStFoll. The notation of the six subsets is as follows. "Curr" refers to reference pictures that are included in the reference picture lists of the current picture and hence may be used as inter prediction reference for the current picture. "Foll" refers to reference pictures that are not included in the reference picture lists of the current picture but may be used in subsequent pictures in decoding order as reference pictures. "St" refers to short-term reference pictures, which may generally be identified through a certain number of least significant bits of their POC value. "Lt" refers to long-term reference pictures, which are specifically identified and generally have a greater difference of POC values relative to the current picture than what can be represented by the mentioned certain number of least significant bits. "0" refers to those reference pictures that have a smaller POC value than that of the current picture. "1" refers to those reference pictures that have a greater POC value than that of the current picture. RefPicSetStCurr0, RefPicSetStCurr1, RefPicSetStFoll0 and RefPicSetStFoll1 are collectively referred to as the short-term subset of the reference picture set. RefPicSetLtCurr and RefPicSetLtFoll are collectively referred to as the long-term subset of the reference picture set.

In HEVC, a reference picture set may be specified in a sequence parameter set and taken into use in the slice header through an index to the reference picture set. A reference picture set may also be specified in a slice header. A reference picture set may be coded independently or may be predicted from another reference picture set (known as inter-RPS prediction). In both types of reference picture set coding, a flag (used_by_curr_pic_X_flag) is additionally sent for each reference picture indicating whether the reference picture is used for reference by the current picture (included in a *Curr list) or not (included in a *Foll list). Pictures that are included in the reference picture set used by the current slice are marked as "used for reference", and pictures that are not in the reference picture set used by the current slice are marked as "unused for reference". If the current picture is an IDR picture, RefPicSetStCurr0, RefPicSetStCurr1, RefPicSetStFoll0, RefPicSetStFoll1, RefPicSetLtCurr, and RefPicSetLtFoll are all set to empty.

A Decoded Picture Buffer (DPB) may be used in the encoder and/or in the decoder. There are two reasons to buffer decoded pictures, for references in inter prediction and for reordering decoded pictures into output order. As H.264/AVC and HEVC provide a great deal of flexibility for both reference picture marking and output reordering, separate buffers for reference picture buffering and output picture buffering may waste memory resources. Hence, the DPB may include a unified decoded picture buffering process for reference pictures and output reordering. A decoded picture may be removed from the DPB when it is no longer used as a reference and is not needed for output.

In many coding modes of H.264/AVC and HEVC, the reference picture for inter prediction is indicated with an index to a reference picture list. The index may be coded with variable length coding, which usually causes a smaller index to have a shorter value for the corresponding syntax element. In H.264/AVC and HEVC, two reference picture lists (reference picture list 0 and reference picture list 1) are generated for each bi-predictive (B) slice, and one reference picture list (reference picture list 0) is formed for each inter-coded (P) slice.

A reference picture list, such as reference picture list 0 and reference picture list 1, is typically constructed in two steps: First, an initial reference picture list is generated. The initial reference picture list may be generated for example on the basis of frame_num, POC, temporal_id (or TemporalId or alike), or information on the prediction hierarchy such as GOP structure, or any combination thereof. Second, the initial reference picture list may be reordered by reference picture list reordering (RPLR) commands, also known as reference picture list modification syntax structure, which may be contained in slice headers. If reference picture sets are used, the reference picture list 0 may be initialized to contain RefPicSetStCurr0 first, followed by RefPicSetStCurr1, followed by RefPicSetLtCurr. Reference picture list 1 may be initialized to contain RefPicSetStCurr1 first, followed by RefPicSetStCurr0. In HEVC, the initial reference picture lists may be modified through the reference picture list modification syntax structure, where pictures in the initial reference picture lists may be identified through an entry index to the list. In other words, in HEVC, reference picture list modification is encoded into a syntax structure comprising a loop over each entry in the final reference picture list, where each loop entry is a fixed-length coded index to the initial reference picture list and indicates the picture in ascending position order in the final reference picture list.

Many coding standards, including H.264/AVC and HEVC, may have decoding process to derive a reference picture index to a reference picture list, which may be used to indicate which one of the multiple reference pictures is used for inter prediction for a particular block. A reference picture index may be coded by an encoder into the bitstream is some inter coding modes or it may be derived (by an encoder and a decoder) for example using neighbouring blocks in some other inter coding modes.

In order to represent motion vectors efficiently in bitstreams, motion vectors may be coded differentially with respect to a block-specific predicted motion vector. In many video codecs, the predicted motion vectors are created in a predefined way, for example by calculating the median of the encoded or decoded motion vectors of the adjacent blocks. Another way to create motion vector predictions, sometimes referred to as advanced motion vector prediction (AMVP), is to generate a list of candidate predictions from adjacent blocks and/or co-located blocks in temporal reference pictures and signalling the chosen candidate as the motion vector predictor. In addition to predicting the motion vector values, the reference index of previously coded/decoded picture can be predicted. The reference index is typically predicted from adjacent blocks and/or co-located blocks in temporal reference picture. Differential coding of motion vectors is typically disabled across slice boundaries.

Scalable video coding may refer to coding structure where one bitstream can contain multiple representations of the content, for example, at different bitrates, resolutions or frame rates. In these cases the receiver can extract the desired representation depending on its characteristics (e.g. resolution that matches best the display device). Alternatively, a server or a network element can extract the portions of the bitstream to be transmitted to the receiver depending on e.g. the network characteristics or processing capabilities of the receiver. A meaningful decoded representation can be produced by decoding only certain parts of a scalable bit stream. A scalable bitstream typically consists of a "base layer" providing the lowest quality video available and one or more enhancement layers that enhance the video quality when received and decoded together with the lower layers. In order to improve coding efficiency for the enhancement layers, the coded representation of that layer typically depends on the lower layers. E.g. the motion and mode information of the enhancement layer can be predicted from lower layers. Similarly the pixel data of the lower layers can be used to create prediction for the enhancement layer.

In some scalable video coding schemes, a video signal can be encoded into a base layer and one or more enhancement layers. An enhancement layer may enhance, for example, the temporal resolution (i.e., the frame rate), the spatial resolution, or simply the quality of the video content represented by another layer or part thereof. Each layer together with all its dependent layers is one representation of the video signal, for example, at a certain spatial resolution, temporal resolution and quality level. In this document, we refer to a scalable layer together with all of its dependent layers as a "scalable layer representation". The portion of a scalable bitstream corresponding to a scalable layer representation can be extracted and decoded to produce a representation of the original signal at certain fidelity.

Scalability modes or scalability dimensions may include but are not limited to the following:

- Quality scalability: Base layer pictures are coded at a lower quality than enhancement layer pictures, which may be achieved for example using a greater quantization parameter value (i.e., a greater quantization step size for transform coefficient quantization) in the base layer than in the enhancement layer.
- Spatial scalability: Base layer pictures are coded at a lower resolution (i.e. have fewer samples) than enhancement layer pictures. Spatial scalability and quality scalability, particularly its coarse-grain scalability type, may sometimes be considered the same type of scalability.
- Bit-depth scalability: Base layer pictures are coded at lower bit-depth (e.g. 8 bits) than enhancement layer pictures (e.g. 10 or 12 bits).
- Dynamic range scalability: Scalable layers represent a different dynamic range and/or images obtained using a different tone mapping function and/or a different optical transfer function.
- Chroma format scalability: Base layer pictures provide lower spatial resolution in chroma sample arrays (e.g. coded in 4:2:0 chroma format) than enhancement layer pictures (e.g. 4:4:4 format).
- Color gamut scalability: enhancement layer pictures have a richer/broader color representation range than that of the base layer pictures - for example the enhancement layer may have UHDTV (ITU-R BT.2020) color gamut and the base layer may have the ITU-R BT.709 color gamut.
- View scalability, which may also be referred to as multiview coding. The base layer represents a first view, whereas an enhancement layer represents a second view.
- Depth scalability, which may also be referred to as depth-enhanced coding. A layer or some layers of a bitstream may represent texture view(s), while other layer or layers may represent depth view(s).
- Region-of-interest scalability (as described below).
- Interlaced-to-progressive scalability (also known as field-to-frame scalability): coded interlaced source content material of the base layer is enhanced with an enhancement layer to represent progressive source content.
- Hybrid codec scalability (also known as coding standard scalability): In hybrid codec scalability, the bitstream syntax, semantics and decoding process of the base layer and the enhancement layer are specified in different video coding standards. Thus, base layer pictures are coded according to a different coding standard or format than enhancement layer pictures. For example, the base layer may be coded with H.264/AVC and an enhancement layer may be coded with an HEVC multi-layer extension.

It should be understood that many of the scalability types may be combined and applied together. For example, color gamut scalability and bit-depth scalability may be combined.

The term layer may be used in context of any type of scalability, including view scalability and depth enhancements. An enhancement layer may refer to any type of an enhancement, such as SNR, spatial, multiview, depth, bit-depth, chroma format, and/or color gamut enhancement. A base layer may refer to any type of a base video sequence, such as a base view, a base layer for SNR/spatial scalability, or a texture base view for depth-enhanced video coding.

A scalable video encoder for quality scalability (also known as Signal-to-Noise or SNR) and/or spatial scalability may be implemented as follows. For a base layer, a conventional non-scalable video encoder and decoder may be used. The reconstructed/decoded pictures of the base layer are included in the reference picture buffer and/or reference picture lists for an enhancement layer. In case of spatial scalability, the reconstructed/decoded base-layer picture may be upsampled prior to its insertion into the reference picture lists for an enhancement-layer picture. The base layer decoded pictures may be inserted into a reference picture list(s) for coding/decoding of an enhancement layer picture similarly to the decoded reference pictures of the enhancement layer. Consequently, the encoder may choose a base-layer reference picture as an inter prediction reference and indicate its use with a reference picture index in the coded bitstream. The decoder decodes from the bitstream, for example from a reference picture index, that a base-layer picture is used as an inter prediction reference for the enhancement layer. When a decoded base-layer picture is used as the prediction reference for an enhancement layer, it is referred to as an inter-layer reference picture.

While the previous paragraph described a scalable video codec with two scalability layers with an enhancement layer and a base layer, it needs to be understood that the description can be generalized to any two layers in a scalability hierarchy with more than two layers. In this case, a second enhancement layer may depend on a first enhancement layer in encoding and/or decoding processes, and the first enhancement layer may therefore be regarded as the base layer for the encoding and/or decoding of the second enhancement layer. Furthermore, it needs to be understood that there may be inter-layer reference pictures from more than one layer in a reference picture buffer or reference picture lists of an enhancement layer, and each of these inter-layer reference pictures may be considered to reside in a base layer or a reference layer for the enhancement layer being encoded and/or decoded. Furthermore, it needs to be understood that other types of inter-layer processing than reference-layer picture upsampling may take place instead or additionally. For example, the bit-depth of the samples of the reference-layer picture may be converted to the bit-depth of the enhancement layer and/or the sample values may undergo a mapping from the color space of the reference layer to the color space of the enhancement layer.

A scalable video coding and/or decoding scheme may use multi-loop coding and/or decoding, which may be characterized as follows. In the encoding/decoding, a base layer picture may be reconstructed/decoded to be used as a motion-compensation reference picture for subsequent pictures, in coding/decoding order, within the same layer or as a reference for inter-layer (or inter-view or inter-component) prediction. The reconstructed/decoded base layer picture may be stored in the DPB. An enhancement layer picture may likewise be reconstructed/decoded to be used as a motion-compensation reference picture for subsequent pictures, in coding/decoding order, within the same layer or as reference for inter-layer (or inter-view or inter-component) prediction for higher enhancement layers, if any. In addition to reconstructed/decoded sample values, syntax element values of the base/reference layer or variables derived from the syntax element values of the base/reference layer may be used in the inter-layer/inter-component/inter-view prediction.

Inter-layer prediction may be defined as prediction in a manner that is dependent on data elements (e.g., sample values or motion vectors) of reference pictures from a different layer than the layer of the current picture (being encoded or decoded). Many types of inter-layer prediction exist and may be applied in a scalable video encoder/decoder. The available types of inter-layer prediction may for example depend on the coding profile according to which the bitstream or a particular layer within the bitstream is being encoded or, when decoding, the coding profile that the bitstream or a particular layer within the bitstream is indicated to conform to. Alternatively or additionally, the available types of inter-layer prediction may depend on the types of scalability or the type of a scalable codec or video coding standard amendment (e.g. SHVC, MV-HEVC, or 3D-HEVC) being used.

Inter-layer prediction may be defined as prediction in a manner that is dependent on data elements (e.g., sample values or motion vectors) of reference pictures from a different layer than the layer of the current picture (being encoded or decoded). Many types of inter-layer prediction exist and may be applied in a scalable video encoder/decoder. The available types of inter-layer prediction may for example depend on the coding profile according to which the bitstream or a particular layer within the bitstream is being encoded or, when decoding, the coding profile that the bitstream or a particular layer within the bitstream is indicated to conform to. Alternatively or additionally, the available types of inter-layer prediction may depend on the types of scalability or the type of a scalable codec or video coding standard amendment (e.g. SHVC, MV-HEVC, or 3D-HEVC) being used.

The types of inter-layer prediction may comprise, but are not limited to, one or more of the following: inter-layer sample prediction, inter-layer motion prediction, inter-layer residual prediction. In inter-layer sample prediction, at least a subset of the reconstructed sample values of a source picture for inter-layer prediction are used as a reference for predicting sample values of the current picture. In inter-layer motion prediction, at least a subset of the motion vectors of a source picture for inter-layer prediction are used as a reference for predicting motion vectors of the current picture. Typically, predicting information on which reference pictures are associated with the motion vectors is also included in inter-layer motion prediction. For example, the reference indices of reference pictures for the motion vectors may be inter-layer predicted and/or the picture order count or any other identification of a reference picture may be inter-layer predicted. In some cases, inter-layer motion prediction may also comprise prediction of block coding mode, header information, block partitioning, and/or other similar parameters. In some cases, coding parameter prediction, such as inter-layer prediction of block partitioning, may be regarded as another type of inter-layer prediction. In inter-layer residual prediction, the prediction error or residual of selected blocks of a source picture for inter-layer prediction is used for predicting the current picture. In multiview-plus-depth coding, such as 3D-HEVC, cross-component inter-layer prediction may be applied, in which a picture of a first type, such as a depth picture, may affect the inter-layer prediction of a picture of a second type, such as a conventional texture picture. For example, disparitycompensated inter-layer sample value and/or motion prediction may be applied, where the disparity may be at least partially derived from a depth picture.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

A direct reference layer may be defined as a layer that may be used for inter-layer prediction of another layer for which the layer is the direct reference layer. A direct predicted layer may be defined as a layer for which another layer is a direct reference layer. An indirect reference layer may be defined as a layer that is not a direct reference layer of a second layer but is a direct reference layer of a third layer that is a direct reference layer or indirect reference layer of a direct reference layer of the second layer for which the layer is the indirect reference layer. An indirect predicted layer may be defined as a layer for which another layer is an indirect reference layer. An independent layer may be defined as a layer that does not have direct reference layers. In other words, an independent layer is not predicted using inter-layer prediction. A non-base layer may be defined as any other layer than the base layer, and the base layer may be defined as the lowest layer in the bitstream. An independent non-base layer may be defined as a layer that is both an independent layer and a non-base layer.

A source picture for inter-layer prediction may be required to be in the same access unit as the current picture. In some cases, e.g. when no resampling, motion field mapping or other inter-layer processing is needed, the source picture for inter-layer prediction and the respective inter-layer reference picture may be identical. In some cases, e.g. when resampling is needed to match the sampling grid of the reference layer to the sampling grid of the layer of the current picture (being encoded or decoded), inter-layer processing is applied to derive an inter-layer reference picture from the source picture for inter-layer prediction. Examples of such inter-layer processing are described in the next paragraphs.

Inter-layer sample prediction may be comprised resampling of the sample array(s) of the source picture for inter-layer prediction. The encoder and/or the decoder may derive a horizontal scale factor (e.g. stored in variable ScaleFactorX) and a vertical scale factor (e.g. stored in variable ScaleFactorY) for a pair of an enhancement layer and its reference layer for example based on the reference layer location offsets for the pair. If either or both scale factors are not equal to 1, the source picture for inter-layer prediction may be resampled to generate an inter-layer reference picture for predicting the enhancement layer picture. The process and/or the filter used for resampling may be pre-defined for example in a coding standard and/or indicated by the encoder in the bitstream (e.g. as an index among pre-defined resampling processes or filters) and/or decoded by the decoder from the bitstream. A different resampling process may be indicated by the encoder and/or decoded by the decoder and/or inferred by the encoder and/or the decoder depending on the values of the scale factor. For example, when both scale factors are less than 1, a predefined downsampling process may be inferred; and when both scale factors are greater than 1, a pre-defined upsampling process may be inferred. Additionally or alternatively, a different resampling process may be indicated by the encoder and/or decoded by the decoder and/or inferred by the encoder and/or the decoder depending on which sample array is processed. For example, a first resampling process may be inferred to be used for luma sample arrays and a second resampling process may be inferred to be used for chroma sample arrays.

SHVC enables the use of weighted prediction or a color-mapping process based on a 3D lookup table (LUT) for (but not limited to) color gamut scalability. The 3D LUT approach may be described as follows. The sample value range of each color components may be first split into two ranges, forming up to 2x2x2 octants, and then the luma ranges can be further split up to four parts, resulting into up to 8x2x2 octants. Within each octant, a cross color component linear model is applied to perform color mapping. For each octant, four vertices are encoded into and/or decoded from the bitstream to represent a linear model within the octant. The color-mapping table is encoded into and/or decoded from the bitstream separately for each color component. Color mapping may be considered to involve three steps: First, the octant to which a given reference-layer sample triplet (Y, Cb, Cr) belongs is determined. Second, the sample locations of luma and chroma may be aligned through applying a color component adjustment process. Third, the linear mapping specified for the determined octant is applied. The mapping may have cross-component nature, i.e. an input value of one color component may affect the mapped value of another color component. Additionally, if inter-layer resampling is also required, the input to the resampling process is the picture that has been colormapped. The color-mapping may (but needs not to) map samples of a first bit-depth to samples of another bit-depth.

Inter-layer motion prediction may be realized as follows. A temporal motion vector prediction process, such as TMVP of H.265/HEVC, may be used to exploit the redundancy of motion data between different layers. This may be done as follows: when the decoded base-layer picture is upsampled, the motion data of the base-layer picture is also mapped to the resolution of an enhancement layer. If the enhancement layer picture utilizes motion vector prediction from the base layer picture e.g. with a temporal motion vector prediction mechanism such as TMVP of H.265/HEVC, the corresponding motion vector predictor is originated from the mapped base-layer motion field. This way the correlation between the motion data of different layers may be exploited to improve the coding efficiency of a scalable video coder. In SHVC and/or alike, inter-layer motion prediction may be performed by setting the inter-layer reference picture as the collocated reference picture for TMVP derivation.

In signal processing, resampling of images is usually understood as changing the sampling rate (or, equivalently, the sampling density or the sampling grid) of the current image in horizontal or/and vertical directions. Resampling results in a new image which is represented with different number of pixels (or samples) in horizontal or/and vertical direction. In some applications, the process of image resampling is equal to image resizing. In general, resampling may be classified in two processes: downsampling and upsampling.

Downsampling or subsampling process may be defined as reducing the sampling rate of a signal, and it typically results in reducing of the image sizes in horizontal and/or vertical directions. In image downsampling, the spatial resolution of the output image, i.e. the number of pixels in the output image, is reduced compared to the spatial resolution of the input image. Downsampling ratio may be defined as the horizontal or vertical resolution of the downsampled image divided by the respective resolution of the input image for downsampling. Downsampling ratio may alternatively be defined as the number of samples in the downsampled image divided by the number of samples in the input image for downsampling. As the two definitions differ, the term downsampling ratio may further be characterized by indicating whether it is indicated along one coordinate axis or both coordinate axes (and hence as a ratio of number of pixels in the images). Image downsampling may be performed for example by decimation, i.e. by selecting a specific number of pixels, based on the downsampling ratio, out of the total number of pixels in the original image. In some cases downsampling may include low-pass filtering or other filtering operations, which may be performed before or after image decimation. Any low-pass filtering method may be used, including but not limited to linear averaging.

Upsampling process may be defined as increasing the sampling rate of the signal, and it typically results in increasing of the image sizes in horizontal and/or vertical directions. In image upsampling, the spatial resolution of the output image, i.e. the number of pixels in the output image, is increased compared to the spatial resolution of the input image. Upsampling ratio may be defined as the horizontal or vertical resolution of the upsampled image divided by the respective resolution of the input image. Upsampling ratio may alternatively be defined as the number of samples in the upsampled image divided by the number of samples in the input image. As the two definitions differ, the term upsampling ratio may further be characterized by indicating whether it is indicated along one coordinate axis or both coordinate axes (and hence as a ratio of number of pixels in the images). Image upsampling may be performed for example by copying or interpolating pixel values such that the total number of pixels is increased. In some implementations, upsampling may include filtering operations, such as edge enhancement filtering.

Frame packing may be defined to comprise arranging more than one input picture, which may be referred to as (input) constituent frames, into an output picture. In general, frame packing is not limited to any particular type of constituent frames or the constituent frames need not have a particular relation with each other. In many cases, frame packing is used for arranging constituent frames of a stereoscopic video clip into a single picture sequence, as explained in more details in the next paragraph. The arranging may include placing the input pictures in spatially non-overlapping areas within the output picture. For example, in a side-by-side arrangement, two input pictures are placed within an output picture horizontally adjacently to each other. The arranging may also include partitioning of one or more input pictures into two or more constituent frame partitions and placing the constituent frame partitions in spatially non-overlapping areas within the output picture. The output picture or a sequence of frame-packed output pictures may be encoded into a bitstream e.g. by a video encoder. The bitstream may be decoded e.g. by a video decoder. The decoder or a post-processing operation after decoding may extract the decoded constituent frames from the decoded picture(s) e.g. for displaying.

In frame-compatible stereoscopic video (a.k.a. frame packing of stereoscopic video), a spatial packing of a stereo pair into a single frame is performed at the encoder side as a pre-processing step for encoding and then the frame-packed frames are encoded with a conventional 2D video coding scheme. The output frames produced by the decoder contain constituent frames of a stereo pair. In a typical operation mode, the spatial resolution of the original frames of each view and the packaged single frame have the same resolution. In this case the encoder downsamples the two views of the stereoscopic video before the packing operation. The spatial packing may use for example a side-by-side or top-bottom format, and the downsampling should be performed accordingly.

Some example implementations contemplate the use of media file format standards that include, but are not limited to, ISO base media file format (ISO/IEC 14496-12, which may be abbreviated ISOBMFF), MPEG-4 file format (ISO/IEC 14496-14, also known as the MP4 format), file format for NAL (Network Abstraction Layer) unit structured video (ISO/IEC 14496-15) and 3GPP file format (3GPP TS 26.244, also known as the 3GP format). The ISO base media file format is the base for derivation of all the above mentioned file formats (excluding the ISO base media file format itself).

Some concepts, structures, and specifications of ISOBMFF are described below as an example of a container file format, based on which the embodiments may be implemented. However, the aspects of the invention are not limited to ISOBMFF, but rather the description is given for one possible basis on top of which the invention may be partly or fully realized.

One building block in the ISOBMFF is called a box. Each box may have a header and a payload. The box header indicates the type of the box and the size of the box, typically in terms of bytes. A box may enclose other boxes, and the ISO file format specifies which box types are allowed within a box of a certain type. Furthermore, the presence of some boxes may be mandatory in each file, while the presence of other boxes may be optional. Additionally, for some box types, it may be allowable to have more than one box present in a file. Thus, the ISOBMFF may be considered to specify a hierarchical structure of boxes. Each box of the ISO base media file may be identified by a four-character code (4CC, fourCC). A four-character code may interchangeably be represented by a 32-bit unsigned integer (by assuming a certain conversion of characters to 8-bit values, a certain bit endianness, and a certain byte endianness). The header may provide information about the type and size of the box.

According to the ISOBMFF, a file may include media data and metadata that may be enclosed in separate boxes. In an example embodiment, the media data may be provided in a media data (mdat) box and the movie (moov) box may be used to enclose the metadata. In some cases, for a file to be operable, both of the mdat and moov boxes must be present. The movie (moov) box may include one or more tracks, and each track may reside in one corresponding track (trak) box. Each track is associated with a handler, identified by a four-character code, specifying the track type. Video, audio, and image sequence tracks can be collectively called media tracks, and they contain an elementary media stream. Other track types comprise hint tracks and timed metadata tracks. Tracks comprise samples, such as audio or video frames. A media track refers to samples (which may also be referred to as media samples) formatted according to a media compression format (and its encapsulation to the ISOBMFF). A hint track refers to hint samples, containing cookbook instructions for constructing packets for transmission over an indicated communication protocol. The cookbook instructions may include guidance for packet header construction and may include packet payload construction. In the packet payload construction, data residing in other tracks or items may be referenced. As such, for example, data residing in other tracks or items may be indicated by a reference as to which piece of data in a particular track or item is instructed to be copied into a packet during the packet construction process. A timed metadata track may refer to samples describing referred media and/or hint samples. For the presentation of one media type, one media track may be selected.

In ISO/IEC 14496-15 ("Carriage of network abstraction layer (NAL) unit structured video in the ISO base media file format"), the extractor NAL-unit-like structure is meant for extracting one or more entire NAL units from another track by reference into the track containing the extractor. An extractor NAL-unit-like structure may be specified to comprise constructors whose execution results into one or more entire NAL units. A NAL-unit-like structure may be specified to comprise a NAL unit header and NAL unit payload like any NAL units, but start code emulation prevention (that is required for a NAL unit) might not be followed in a NAL-unit-like structure.

Hypertext Transfer Protocol (HTTP) has been widely used for the delivery of real-time multimedia content over the Internet, such as in video streaming applications. Several commercial solutions for adaptive streaming over HTTP, such as Microsoft® Smooth Streaming, Apple® Adaptive HTTP Live Streaming and Adobe® Dynamic Streaming, have been launched as well as standardization projects have been carried out. Adaptive HTTP streaming (AHS) was first standardized in Release 9 of 3rd Generation Partnership Project (3GPP) packet-switched streaming (PSS) service (3GPP TS 26.234 Release 9: "Transparent end-to-end packet-switched streaming service (PSS); protocols and codecs"). MPEG took 3GPP AHS Release 9 as a starting point for the MPEG DASH standard (ISO/IEC 23009-1: "Dynamic adaptive streaming over HTTP (DASH)-Part 1: Media presentation description and segment formats"). MPEG DASH and 3GP-DASH are technically close to each other and may therefore be collectively referred to as DASH. Some concepts, formats, and operations of DASH are described below as an example of a video streaming system, wherein the embodiments may be implemented. The aspects of the invention are not limited to DASH, but rather the description is given for one possible basis on top of which the invention may be partly or fully realized.

In DASH, the multimedia content may be stored on an HTTP server and may be delivered using HTTP. The content may be stored on the server in two parts: Media Presentation Description (MPD), which describes a manifest of the available content, its various alternatives, their URL addresses, and other characteristics; and segments, which contain the actual multimedia bitstreams in the form of chunks, in a single or multiple files. The MPD provides the necessary information for clients to establish a dynamic adaptive streaming over HTTP. The MPD contains information describing media presentation, such as an HTTP-uniform resource locator (URL) of each Segment to make a GET Segment request. To play the content, the DASH client may obtain the MPD by using HTTP, email, thumb drive, broadcast, or other transport methods, for example. By parsing the MPD, the DASH client may become aware of the program timing, media-content availability, media types, resolutions, minimum and maximum bandwidths, and the existence of various encoded alternatives of multimedia components, accessibility features and required digital rights management (DRM), media-component locations on the network, and other content characteristics. Using this information, the DASH client may select the appropriate encoded alternative and start streaming the content by fetching the segments using HTTP GET requests, for example. After appropriate buffering to allow for network throughput variations, the client may continue fetching the subsequent segments and also monitor the network bandwidth fluctuations. The client may decide how to adapt to the available bandwidth by fetching segments of different alternatives (with lower or higher bitrates) to maintain an adequate buffer.

In the context of DASH, the following definitions may be used: A media content component or a media component may be defined as one continuous component of the media content with an assigned media component type that can be encoded individually into a media stream. Media content may be defined as one media content period or a contiguous sequence of media content periods. Media content component type may be defined as a single type of media content such as audio, video, or text. A media stream may be defined as an encoded version of a media content component.

In DASH, a hierarchical data model is used to structure a media presentation as follows. A media presentation consists of a sequence of one or more Periods, each Period contains one or more Groups, each Group contains one or more Adaptation Sets, each Adaptation Sets contains one or more Representations, each Representation consists of one or more Segments. A Group may be defined as a collection of Adaptation Sets that are not expected to be presented simultaneously. An Adaptation Set may be defined as a set of interchangeable encoded versions of one or several media content components. A Representation is one of the alternative choices of the media content or a subset thereof typically differing by the encoding choice, such as by bitrate, resolution, language, codec, or the like, for example. The Segment contains certain duration of media data, and metadata to decode and present the included media content. A Segment is identified by a URI and can typically be requested by a HTTP GET request. A Segment may be defined as a unit of data associated with an HTTP-URL and optionally a byte range that are specified by an MPD.

360-degree panoramic content (i.e., images and video) cover horizontally the full 360-degree field-of-view around the capturing position of an imaging device. The vertical field-of-view may vary and can be e.g. 180 degrees. Panoramic image covering 360-degree field-of-view horizontally and 180-degree field-of-view vertically can be represented by a sphere that has been mapped to a two-dimensional image plane using equirectangular projection. In this case, the horizontal coordinate may be considered equivalent to a longitude, and the vertical coordinate may be considered equivalent to latitude, with no transformation or scaling applied. In some cases panoramic content with 360-degree horizontal field-of-view but with less than 180-degree vertical field-of-view may be considered special cases of equirectangular projection, where the polar areas of the sphere have not been mapped onto the two-dimensional image plane. In some cases a panoramic image may have less than 360-degree horizontal field-of-view and up to 180-degree vertical field-of-view, while otherwise has the characteristics of equirectangular projection format.

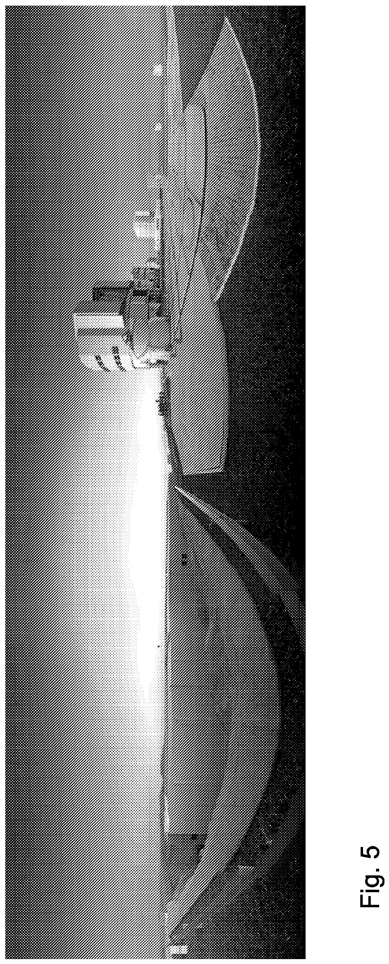

Figure 5 illustrates an example of an equirectangular 360-degree panorama image. The equirectangular panorama format stretches the nadir and zenith areas. The number of pixels towards the nadir or zenith is proportionally greater compared to that in the equator. This results into unnecessarily large number of pixels being encoded and decoded in the areas close to the nadir and zenith, which in turn increases encoding and decoding complexity and may result into a decreased rate-distortion performance.

There are different methods to capture 360-degree images. Some of the common solutions and arrangements for 360-degree field-of-view images comprise stitching images together from multi camera setup, catadioptric devices and stitching multiple fisheye images.

Catadioptric devices consist of conventional lens and a mirror. The mirror could have different convex shapes e.g. parabolic, planar or spherical. The lens captures the light rays reflected through the mirror which provides an image with very high field-of-view.

Another method for 360-degree content creation is by using fisheye lenses. Due to the very limited field-of-view of conventional cameras, the proper way to create 360-degree images is by means of cameras which have wide field-of-views. Fisheye lenses are covering very high filed-of-view (usually more than 180-degree). These lenses capture the light waves by using refraction effect, since the light waves which have higher angles of incident (in the image edges) are more curved in the image. One can create 360 degree view by using projection and stitching techniques with only few fisheye images.

A family of pseudo-cylindrical projections attempts to minimize the distortion of the polar regions of the cylindrical projections, such as the equirectangular projection, by bending the meridians toward the center of the map as a function of longitude while maintaining the cylindrical characteristic of parallel parallels. Pseudo-cylindrical projections result into non-rectangular contiguous 2D images representing the projected sphere. However, it is possible to present pseudo-cylindrical projections in interrupted forms that are made by joining several regions with appropriate central meridians and false easting and clipping boundaries. Pseudo-cylindrical projections may be categorized based upon the shape of the meridians to sinusoidal, elliptical, parabolic, hyperbolic, rectilinear and miscellaneous pseudo-cylindrical projections. An additional characterization is based upon whether the meridians come to a point at the pole or are terminated along a straight line (in which case the projection represents less than 180 degrees vertically).

The present embodiments propose performing resampling and rearranging of a panorama image based on latitude. Such a solution keeps the underlying projection scheme, hence there is no need for handling multiple projections in the rendering. The proposed embodiments require only simple one-dimensional (1D) resampling and maintain rectangular sub-images, while keeping signal continuity within the subimage regions. The present solution provides a finer and closer to optimal sampling density matching the latitude when compared to the latitude-wise sampling density of the equirectangular panorama format, for instance.

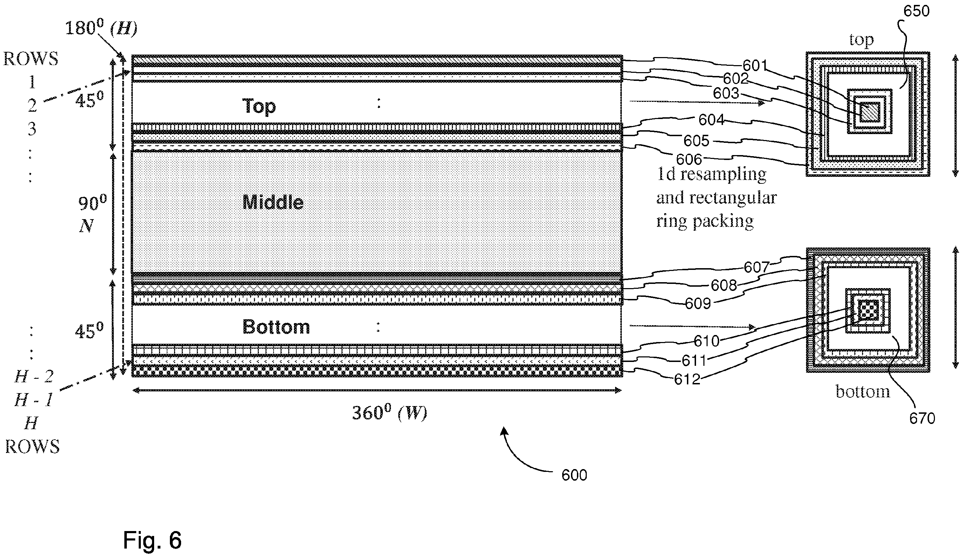

An embodiment for resampling and arrangement of a panorama picture 600 is illustrated in Figure 6.

In the Figure 6, a top region of a panorama picture 600 is resampled. In addition, a bottom region of the panorama picture 600 is resampled. The resampling applied to the top region and the bottom region is not necessarily identical. In both regions, the resampling is done in 1D domain, i.e. each sample row of the region is resampled in 1D domain and resampling or filtering vertically across sample rows is not performed. Each resampled sample row 601, 602, 603, 604, 605, 606, 607, 608, 609, 610, 611, 612 is rearranged. In the example of Figure 6, each resampled sample row 601, 602, 603, 604, 605, 606 of the top region, and each resampled sample row 607, 608, 609, 610, 611, 612 of the bottom region are arranged along a polygonal chain in an onion shell like arrangement 650, 670 where the polar sample row (i.e. the top-most sample row 601 of the picture 600 or the bottom-most sample row 612 of the picture 600) is at the innermost polygonal chain in the arranged sample array 650, 670 and the sample row 606, 607 furthest away from the polar latitude becomes the outmost polygonal chain in the arranged sample array 650, 670. This sample arrangement (i.e. the process of arranging samples and the sample array of arranged samples, depending on the context) is referred to as the *nested polygonal chain scan* or *rectangular ring packing*. It is appreciated that the rearranging of resampled sample rows of different regions may not be identical. It is noted that the rearranged polar sample row in Figure 6 may be a single sample or a line segment (rather than a polygonal chain).

In the example of Figure 6, the polygonal chain is a square. The middle region of the panorama picture 600 is retained as the original picture. The size of the region of the panorama picture 600 that undergoes the resampling and arranging rectangular grid is based on the number of rows or the vertical field of view or the latitude range considered for the region in question. In the example of Figure 6, the top and bottom regions of the panoramic picture 600 may each comprise 45 degrees vertical field of view (or 45 degrees of latitude range). However, the selection of these regions may cover different range of the vertical field of view or latitudes, e.g. 30 or 60 degrees. Such selection may depend on, but is not limited to, the application requirement or the scene content to be compressed. Alternatively or additionally, the selection of regions may be done in a manner that the arranged sample arrays 650, 670 and/or the middle region of the panorama picture 600 are aligned to a block grid used in (de)coding. For example, the width and the height of the arranged sample arrays 650, 670 and/or the middle region of the panorama picture 600 may be selected to be a multiple of the CTU width and height, respectively, in HEVC (de)coding or alike.

In an embodiment, the polygonal chain is rectilinear and the line segments of the polygonal chain are along the horizontal and vertical axes of the picture. Thus, each sample in such a polygonal chain is vertically or horizontally adjacent to another sample in the same polygonal chain.

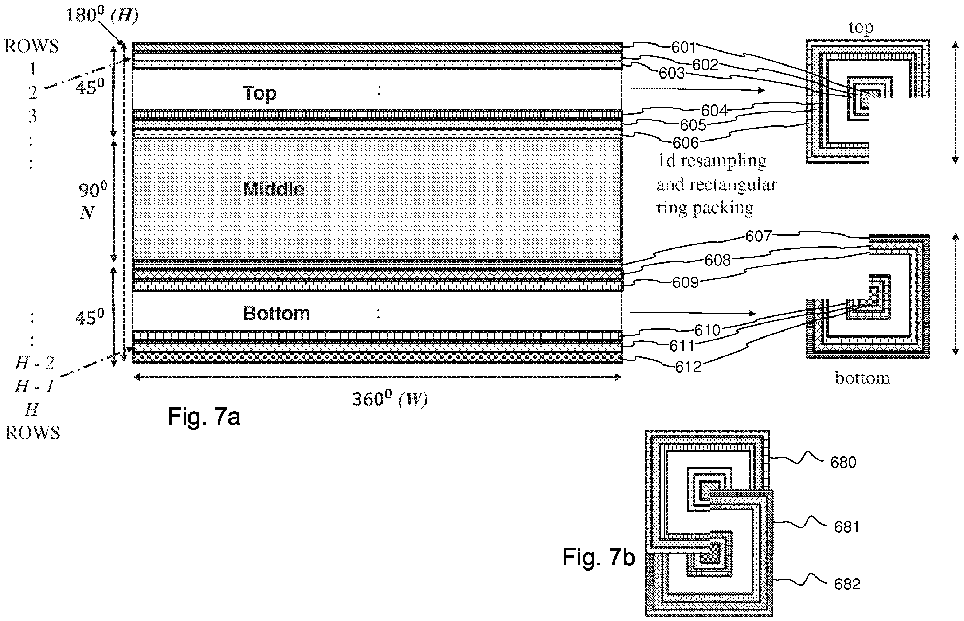

With the rearrangement of Figure 6, the sampling density along each latitude might not be optimal. Hence, in order to adjust the sampling density along the latitude three more nested polygonal chain rearrangements are proposed as shown in Figure 7a,b, 8 and 9.

Figure 7a shows another embodiment for nested polygonal chain rearrangement of top and bottom regions. Each resampled sample row 601, 602, 603, 604, 605, 606, 607, 608, 609, 610, 611, 612 is rearranged. The rearranged sample rows are polygonal chains of four line segments along the x- or y-axis of the arranged sample array, such that the onion shell structure allocates three quarters of a rectangle (forming or included in the arranged sample array). It is noted that the rearranged polar sample row 601, 612 in this case may be a single sample or a single line segment or a polygonal chain of two line segments (rather than a polygonal chain of four line segments).

In the embodiment of Figure 7b, the frame packing may be performed as follows: In a 2x3 grid of partitions of the frame, the first row 680 comes from the top region, the left column of the second row 681 comes from the top region, the right column of the second row 681 comes from the bottom region, and the third row 682 comes from the bottom region.

It is noted that while Figure 7a illustrates the top region to allocate the top-left, top-right, and bottom-left quarters of the rectangle and the bottom region to allocate the top-right, bottom-left, and bottom-right quarters of the rectangle, other arrangements are similarly possible. For example, the top region may be arranged to allocate the top-left, top-right, and bottom-right quarters of the rectangle, and the bottom region may be arranged to allocate the top-left, bottom-left, and bottom-right quarters of the rectangle.

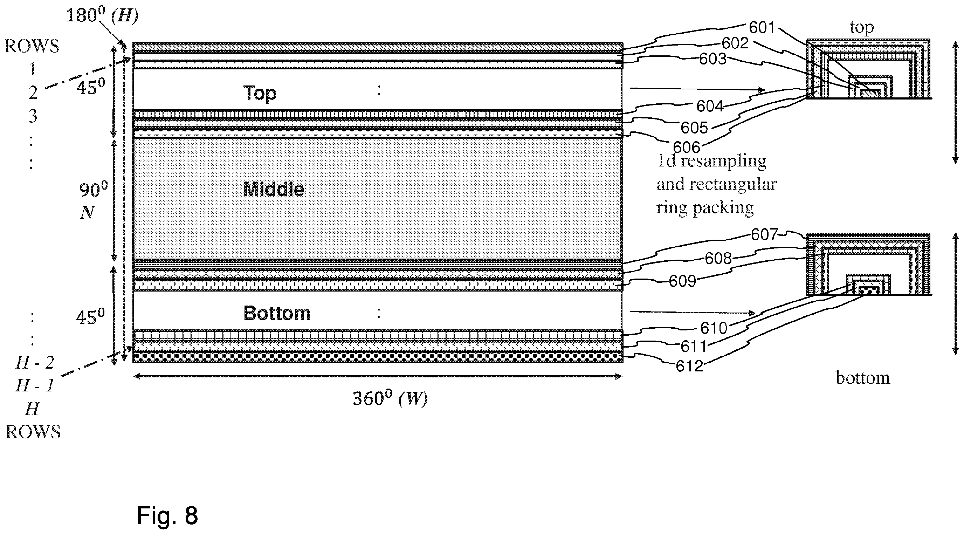

Another nested polygonal chain arrangement is depicted in Figure 8. Each resampled sample row 601, 602, 603, 604, 605, 606, 607, 608, 609, 610, 611, 612 is rearranged. The rearranged sample rows are polygonal chains of three line segments along the x- or y-axis of the arranged sample array, such that the onion shell structure forms a rectangle. It is noted that the rearranged polar sample row in this case is a single sample or a line segment (rather than a polygonal chain).

It is noted that while Figure 8 illustrates a horizontal line segment as the resampled polar sample row, embodiments can be similarly realized with a vertical line segment as the resampled polar row.

The ordering of the proposed rearrangements is such that the sampling density decreases towards a pole.

The resampling of sample rows in the embodiments describing Figures 6-8 may involve filtering. Embodiments are not limited to using a particular filter or any particular filter window (i.e. the number of filter taps). In general, the purpose of the filtering performed with downsampling is to avoid aliasing, and hence a low-pass filter is generally used. The filter window (i.e. the number of filter taps) may be adaptive, e.g. based on the latitude (or the vertical position) of the sample row being filtered. When the filtered picture has 360-degree horizontal field of view, filter windows at the boundaries of the picture may use samples from the opposite side of the picture, i.e. the sample locations used as input samples for filtering may be wrapped over to be within the picture boundaries.

In all Figures 6 - 8, the top/bottom regions are constructed in such a way that the regions are non-overlapping with the middle region of the panorama. However, it needs to be understood that the middle region of the panorama may comprise sample rows that are represented in the nested polygonal chain scan of the top/bottom regions of the panorama.

The previous Figures 6-8 illustrate a method wherein a plurality of sample rows of a picture is resampled into a plurality of resampled sample rows, and wherein the resampled sample rows are rearranged along a nested polygonal chain scan into a rearranged sample array.

In the method, the polar sample row (i.e. in Figures 6 - 8 the top-most sample row 601 of the picture 600 or the bottom-most sample row 612 of the picture 600) may be handled as follows. The number of samples in a resampled polar sample row may first be selected. The selection may be pre-defined, e.g. in a coding standard or may be selected by a processing entity, such as an encoder. The selection may (but is not limited to) be performed on the basis of the one of the following:

- The number of samples in the resampled polar sample row is such that the innermost polygonal chain is a solid sample area (i.e. contains no holes). For example, when the polygonal chain is a square, the number of samples in the sampled polar sample row may be selected to be 1 or 4;
- The number of samples in the resampled polar sample row is such that the innermost polygonal chain encloses a block of a certain size, where the block may correspond to an integer number of coding blocks of HEVC or alike;
- The number of samples in the resampled polar sample row is such that it corresponds to the same or similar sampling density as the sampling density in the equator of the picture; or
- The number of samples in the resampled polar sample row is such that it exactly or approximately minimizes an error measure representing a difference of one or more sampling densities of one or more resampled sample rows and the sampling density in the equator of the picture. The error measure may for example be a sum of sample-row-wise error measures. For the sample-row-wise error measure, the ideal row-wise number of samples can be first derived from the perimeter along the latitude corresponding the sample row, such that the perimeter is sampled with the same spherical domain sample density as that of the equator of the picture. The sample-row-wise error measure may then be derived as the absolute difference between the ideal number of samples and the number of samples in the polygonal chain for the same sample row.
- Rather than the sampling density in the equator of the picture, another sample row in the middle region of the picture may be selected as a source for sampling density used in comparisons above.

If the number of samples in the resampled polar sample row is such that the innermost polygonal chain would form a non-solid area (e.g. a hollow polygon), the samples that are surrounded by the innermost polygonal chain may be interpolated from the samples of the innermost polygonal chain, e.g. using bilinear or bicubic interpolation or may be extrapolated e.g. from above or left-side samples of the innermost polygonal chain. If the number of samples in the resampled polar sample row is such that the innermost polygonal chain would form a non-solid area (e.g. a hollow polygon) and encloses a block, the arranged sample array may be located in a frame in a manner that the enclosed block matches the block grid of the picture. The encoding of the enclosed block may be performed in a manner that minimizes the bitrate cost and omits the distortion consideration in coding mode decisions.

The innermost polygonal chain may be a single sample or a single line segment, even if the term polygonal chain infers a multitude of line segments in other context.

In an embodiment, the chroma format is taken into account when selecting the number of samples in a resampled polar sample row. For example, when 4:2:0 sampling is in use, the number of samples in the resampled polar sample row for the luma component may be selected to be divisible by 4, and the number of samples in the resampled polar sample row for each of the chroma components may be selected to that of the luma component divided by 4. Consequently, the rearranged chroma sample array can be arranged to have half the width and height of the rearranged luma sample array and hence following the 4:2:0 sampling principle. In another example, when 4:4:4 sampling is in use, the number of samples in the resampled polar sample row for the luma component and for the chroma components may be selected to be the same.

Selection of the nested polygonal chain may be done as discussed next. The particular nested polygonal chain scan may be pre-defined, e.g. in a coding standard or may be selected by a processing entity, such as an encoder. The particular nested polygonal chain scan is inherently associated with an increment (in the number of samples between resampled sample rows processed towards the equator). The selection may (but is not limited to) be performed on the basis minimizing an error measure, such as that described above, given the particular increment inherent in the nested polygonal chain scan. Increments are typically but are not limited to be constant. In the following, few examples of increments are provided:

- when the polygonal chain is a rectangle (e.g. as in Figure 6), the increment is 8;
- when the polygonal chain is like in described in Figure 7a, the increment is 6;
- when the polygonal chain is like in described in Figure 8, the increment is 4.

In an embodiment, the chroma format is taken into account when selecting the nested polygonal chain. For example, when 4:2:2 sampling is in use, a rectangle may be used as the polygonal chain for the luma component, and a polygonal chain like described in Figure 8 may be used for the chroma components. Furthermore, the number of samples in the resampled polar sample row for the luma component may be double of that in each of the chroma components. Consequently, the number of samples in a polygonal chain for a luma component is double of that in the corresponding polygonal chain of each of the chroma components, i.e. the rearranged chroma sample array can be arranged to have half the width of the rearranged luma sample array and hence following the 4:2:2 sampling principle.

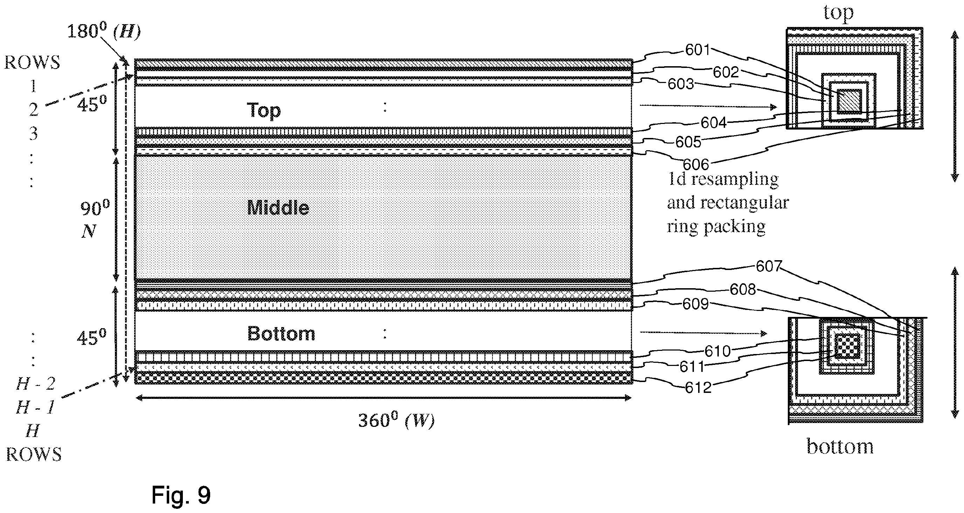

According to an embodiment, more than one nested polygonal chain type may be used to arrange the top or bottom region. One example is shown in Figure 9, where a rectangle is used for the innermost polygonal chains, a polygonal chain of three line segments for middle polygonal chains, and a polygonal chain of two line segments for the outermost polygonal chains. It needs to be understood that this arrangement is merely an example and other combinations of polygonal chain types may be used similarly. Moreover, it is not necessary to use identical combinations of polygonal chain types for both top and bottom regions, meaning that different combinations of polygonal chain types for the top and bottom regions may be used.

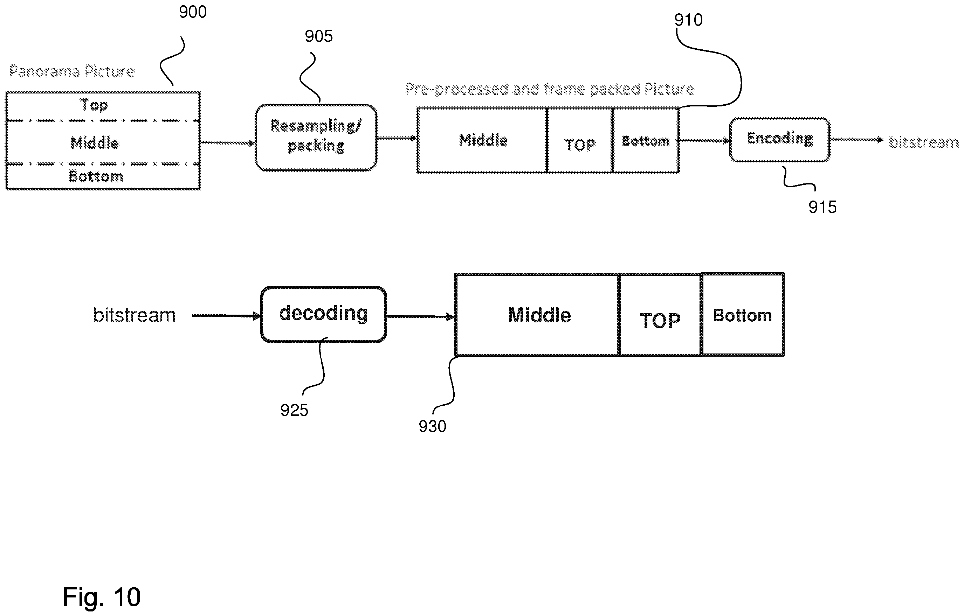

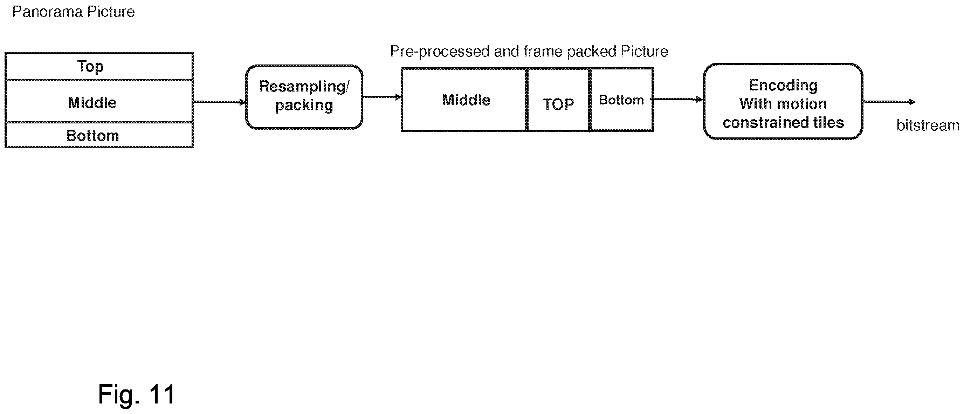

Figure 10 illustrates an encoding and decoding of a bitstream. As a pre-processing step to encoding, an uncompressed panorama picture 900 may be resampled and arranged 905 along one or more of the nested polygonal chain scans according to Figures 6 - 9. The sample arrays of the middle region and the rearranged top and bottom regions can be packed into a single frame 910 as shown in Figure 10 and encoded 915 into a bitstream. Alternatively, the middle region and the rearranged top and bottom regions can be encoded separately into different bitstreams. Alternatively, the rearranged top and bottom regions can be packed into a single frame and encoded separately from the middle region. Furthermore, in the case of a frame packed picture, motion-constrained tile sets or alike can be used in encoding as shown in the Figure 11. It is to be noted that in general the rearranged top and bottom regions need not to be rectangular.

According to an embodiment, an encoder is configured to indicate in or along the bitstream a first set of information comprising one or more of the following:

- the type of the nested polygonal chain scan; e.g. a value pointing to a list of pre-defined enumerated types of nested polygonal chain scans;
- the number of samples in the resampled polar sample row;
- the number of sample rows or block rows (e.g. CTU rows in HEVC or alike) that have been processed by resampling and nested polygonal chain scan arrangement;
- location and size of rearranged sample arrays within the frame packed coded picture;
- identification of which region of the original picture the rearranged sample arrays correspond to.

The first set of information is in this application referred to as a description of the applied nested polygonal chain scan. The encoder may indicate the description of the applied nested polygonal chain scan e.g. in a picture parameter set, a sequence parameter set, or a supplemental enhancement information (SEI) message.

According to an embodiment, a region is encoded as one or more complete slices, not containing coded data from other regions. According to an embodiment, a region is coded as a tile or a tile set, not containing coded data from other regions.

According to an embodiment, an encoder is configured to indicate in the bitstream a second set of information comprising one or more of the following:

- size of the slice, tile, or tile set within the picture;
- location for the slice, tile, or tile set.

This information may be indicated e.g. in a slice header or per tile or tile set basis.

Complimentary to the pre-processing, a post-processing 930 after decoding 925 (Figure 10) may be performed to reconstruct a panorama picture. Steps that are opposite to the pre-processing steps may be performed. For example, a resampled sample row may be first obtained by arranging samples of a polygonal chain into a row of samples. The resampled sample row may then be upsampled to the row width of the panorama picture that is reconstructed.

In an embodiment, a first region of the plurality of regions of a first picture is encoded, wherein said encoding comprises reconstructing a first preliminary reconstructed region corresponding to the first region. A first reconstructed region is formed from the first preliminary reconstructed region by resampling and/or rearranging the first preliminary reconstructed region. The first reconstructed region is used as a reference for prediction in encoding another region or regions of the first picture and/or a second picture.

Correspondingly, a decoding method according to an embodiment comprises decoding a first encoded region of a first picture into a first preliminary reconstructed region. A first reconstructed region is formed from the first preliminary reconstructed region by resampling and/or rearranging the first preliminary reconstructed region. The first reconstructed region is used as a reference for prediction in decoding another region or regions of the first picture and/or a second picture.

In an embodiment, said resampling and rearrangement is implemented for an intra picture, i.e. said first picture is encoded as an intra picture.

The first picture may be of any one of the following representation formats: 1) original panorama picture format, such as an equirectangular panorama picture format, or 2) any one of the rearrangements as discussed with reference to Figures 6-9. When the first picture is a panorama picture in its original format (e.g. equirectangular panorama), resampling and rearrangement for the first reconstructed region may be performed as described for the top or bottom region with reference to any of the Figures 6-9. When the first picture has a representation format of one of the rearrangements as discussed with reference to Figures 6 - 9, resampling and rearrangement may be performed to form the first reconstructed region and/or the first reconstructed picture (comprising the first reconstructed region) in original panorama picture format (e.g. equirectangular panorama picture). In both cases, the resampling and rearrangement may be performed in order to have the same representation format in the first reconstructed picture (comprising the first reconstructed region) as that in the another region or regions or in the second picture (or, generally, in one or more subsequent pictures using the first reconstructed picture as a reference for inter prediction).

Said rearranging may additionally comprise relocating, rotating, and/or mirroring.

According to an embodiment, said forming of the first reconstructed region is performed before encoding or decoding another region or regions of the first picture and the first reconstructed region is used for prediction said another region or regions and/or for filtering (e.g. deblocking filtering, SAO, and/or ALF) said another region or regions.

According to an embodiment, said forming of the first reconstructed region is performed after encoding or decoding the first picture.

According to an embodiment, the present solution extends the resampling and rearrangement along with relocation to inter-coded picture with the following restriction: the sampling density of top region and bottom region of a reconstructed picture $IC_0$ (decoded from inter-coded picture) which is included in the decoded picture buffer should be greater than or equal to the sampling density of top region and bottom region of that picture which uses $IC_0$ in its prediction.

According to an embodiment, an encoder is configured to indicate in the bitstream a third set of information comprising one or more of the following:

- location and size of regions within the preliminary reconstructed picture (of a first picture, such as an intra picture);
- rearranging instructions, for selected regions and locations of regions (after resampling, if that is applied);
- location and size of regions within the reconstructed picture (of a first picture, such as an intra picture).

This information may be indicated e.g. in a picture parameter set or a sequence parameter set.

According to an embodiment, a decoder is configured to decode from the bitstream one or more of the above information. From the decoded indications, the decoder is configured to conclude the parameters for the resampling and/or relocating process to be applied.

According to an embodiment, an encoder is configured to indicate in the bitstream a fourth set of information comprising one or more of the following:

- resampling for the slice, tile, or tile set to be applied in the resampling process, or size of the slice, tile, or tile set within the reconstructed picture (of an intra picture);
- location for the slice, tile, or tile set (after resampling, if that is applied) within the reconstructed picture (of an intra picture).

This information may be indicated in a slice header or per tile or tile set basis.

According to an embodiment, a decoder is configured to decode from the bitstream one or more of the above information. From the decoded indications, the decoder concludes the parameters for the resampling and/or relocating process to be applied.

According to an embodiment, both the resampled reconstructed picture and the reconstructed picture are included in the decoded picture buffer, as determined by an encoder or by default (e.g. as specified in a coding standard). When determined by an encoder, the encoder may indicate in the bitstream, e.g. in a slice header and/or a picture parameter set, which one(s) of the resampled reconstructed picture and the reconstructed picture are included in the decoded picture buffer.

In an embodiment, reconstructed picture is resampled and rearranged and/or relocated as a part of or connected with the output process from the decoding, as determined by an encoder or by default (e.g. as specified in a coding standard). When determined by an encoder, the encoder may indicate in the bitstream, e.g. in a slice header and/or a picture parameter set and/or a sequence parameter set, if reconstructed picture is resampled and/or relocated. The resampling and/or relocating may result into a picture that has the same representation format as the uncompressed pictures being encoded and the resampled reconstructed picture, such as equirectangular panorama format. The resampling and/or relocating may be included as part of the process of output cropping as in HEVC or alike.

It needs to be understood that while embodiments have been described with reference to intra picture(s) and inter picture(s), another categorization of pictures may be used instead to realize embodiments. For example, instead of intra picture(s) and inter picture(s), embodiments can be realized with reference to IRAP picture(s) and non-IRAP picture(s), respectively. In another example, instead of intra picture(s) and inter picture(s), embodiments can be realized with reference to picture(s) at temporal sub-layers 0 to N, inclusive, and picture(s) at temporal sub-layers greater than N, respectively. In yet another example, an encoder indicates, e.g. on picture basis (e.g. in a slice header and/or a picture parameter set associated with a picture) one or both of the following:

- regional resampling and/or relocating is applied to the resampled reconstructed picture resulting from a conventional encoding/decoding process;
- if the picture uses, buffer as a reference for prediction, a resampled reconstructed picture included in the decoded picture or a reconstructed picture included in the decoded picture buffer.

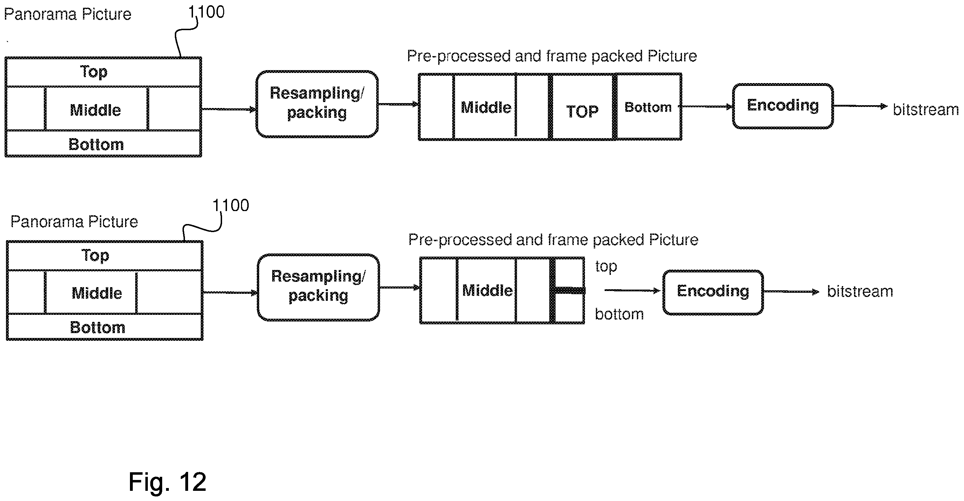

In the following, multiresolution sampling partial picture decoding with motion-constrained tiles is discussed. Figure 12 illustrates how the method can be applied in a coordinated manner for several encoded versions of the same content. The encoded versions may differ in one or more of the following: bitrate; picture quality, which may have obtained through using a different quantization parameter value; spatial resolution; bit-depth per color component; dynamic range; color gamut.

The method according to an embodiment of Figure 12 is described for two versions of the same content coded with different spatial resolution. Figure 12 shows a panorama picture 1100 wherein boundaries of motion-constrained tile sets are indicated (black lines within the picture 1100).

According to an embodiment, the boundaries of motion-constrained tile sets in these two versions are spatially collocated. This enables creation of spatially non-overlapping tile set tracks or bitstreams having different resolutions. In an embodiment, the boundaries of motion-constrained tiles sets in these two versions need not be spatially collocated. The motion-constrained tile sets in different resolutions may be selected in a manner that the overlap between the tile set tracks or bitstreams of different resolutions is non-existing or moderate. In an embodiment, the tiles belonging to middle region of panorama picture in these two versions are encoded with the same spatial resolution and quality while the tiles belonging to top and bottom regions are encoded with different quality and or resolutions.

## A. Scalable video coding

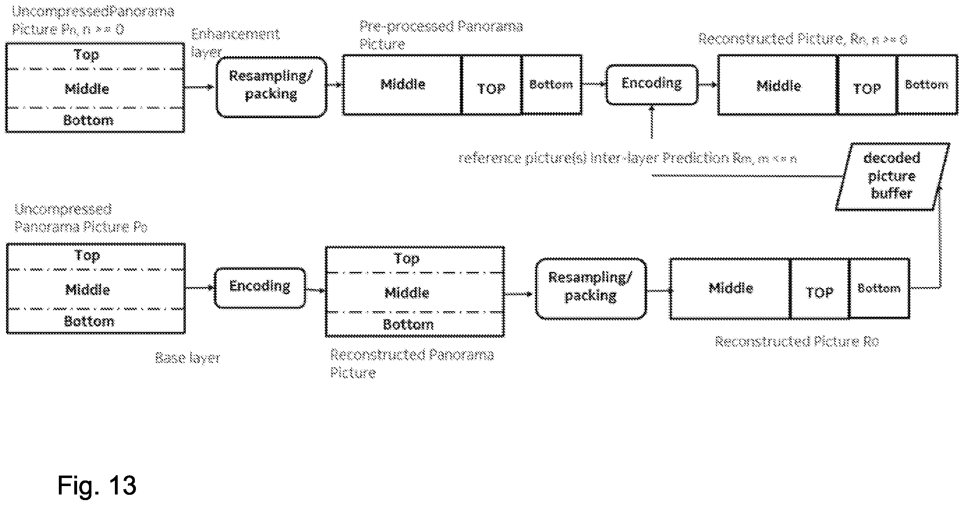

Figure 13 illustrates how the present embodiments may be utilized in inter-layer prediction.

The Figure 13 illustrates how the present embodiments can be applied in a coordinated manner for several encoded layers of the same content. The encoded layers may differ in one or more of the following: bitrate; picture quality, which may have obtained through using a different quantization parameter value; spatial resolution, bit-depth per color component; dynamic range; color gamut.

Without lack of generality, the method of Figure 13 can be described for two layers of the same content coded with different spatial resolution.

The base layer needs not to be coded with tiles or motion-constrained tiles. The base layer may be coded with another coded, such as H.264/AVC. No tile set track or bitstream construction is performed for the base layer. The base layer may contain panoramic picture in any one of the following representation format: 1) full/complete original panorama; 2) any one of the representations discussed with reference to Figures 6 - 9; 3) the middle region of the panorama picture.

A predicted layer uses inter-layer prediction from the base layer.

When the base layer picture is a panorama picture in its original format (e.g. equirectangular panorama) and at least one region in a predicted layer picture users nested polygonal chain scan, a reference picture for inter-layer prediction may be formed by applying the process described with reference to Figures 6 - 9 to the reconstructed base layer picture.

When the base layer picture uses any of the representations discussed with reference to Figures 6 - 9, the inter-layer processing may involve forming a panorama picture in its original format from the reconstructed base layer picture (similarly to the post-processing operation described above) and resampling the panorama picture to the resolution of the predicted layer. When the predicted layer comprises a picture using the original panorama format, the resampled panorama picture may be used as a reference for inter-layer prediction. When the predicted layer comprises a picture using any of the representations described with reference to Figures 6 - 9, the same nested polygonal chain scan process as used for the predicted layer picture may be used for the resampled panorama picture to obtain a reference picture for inter-layer prediction.

According to an embodiment, the base layer is coded with motion-constrained tiles, which collocate with those of the predicted layer. In addition, the inter-layer prediction is constrained in encoding in a manner that no sample values or motion vector information outside the collocated tile in the base-layer are needed for inter-layer prediction of a tile in the predicted layer.

### B. Stereoscopic video coding

The Figure 13 also illustrates an embodiment for stereoscopic video coding. It is noted that while the example figure illustrates a stereoscopic equirectangular panorama, the method is not limited to that format but can be applied to other stereoscopic cylindrical formats.

In the Figure 13, one view (e.g. the left view) is coded with or without motion-constrained tiles and can be coded with any codec, such as HEVC (e.g. Main profile) or H.264/AVC. The views need not have the same spatial resolution or other characteristics (e.g. bitrate, picture quality, bit-depth per color component, dynamic range and/or color gamut).

According to an embodiment, both the views can be represented in any of the following representations: 1) full/complete original panorama; 2) any of the representations discussed with reference to Figures 6 - 9.

### C. Stereoscopic video coding with inter-view prediction

The present embodiments may be applied for stereoscopic and Multiview coding with inter-view prediction between the views.

According to an embodiment, one view (e.g. the left view) is coded with or without motion-constrained tiles and can be coded with any codec, such as HEVC (e.g. Main profile) or H.264/AVC.

According to an embodiment, both the views can be represented in any of the following representations: 1) full/complete original panorama; 2) any of the representations discussed with reference to Figures 6 - 9.

In an embodiment, both the views have share the same representation format, e.g. a particular rearrangement scheme of Figure 6-9 and inter-view prediction is performed between views represented with the same rearrangement scheme.

In an embodiment, the views have a different representation format from each other. For example, the base view may be of the full/complete original panorama format, such as of the equirectangular panorama format, and the predicted view may be of any of the representations discussed with reference to Figures 6 - 9. A reference picture for inter-view prediction may be formed similarly to a reference picture for inter-layer prediction, as described above.

### File encapsulation and selective streaming of top/bottom regions in original format and/or in rearranged format

According to an embodiment, the top region and the bottom region of the picture are encoded twice. In a first encoding, the region in question is pre-processed as described with reference to Figures 6-9 and then encoded. In a second encoding, the region in question is encoded in its original format. In both encodings, the middle region may or may not be encoded, but when the middle region is encoded, it is encoded in a manner that it is independent from the top region and bottom region, e.g. using motion-constrained tile sets. The encoded regions may be encapsulated in a file or Segments in one of the following ways:

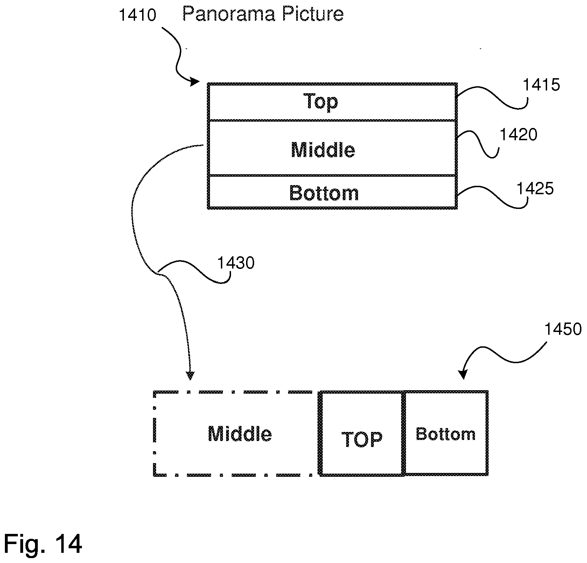

- A first track/Representation is formed containing the top, middle, and bottom regions in their original format. A second track/Representations is formed containing the rearranged top and bottom regions and extracting the middle region by reference from the first track/Representation, e.g. using extractor NAL unit like structures. This method is schematically illustrated in Fig. 14. A first sample 1410 of the first track/Representation contains the top 1415, middle 1420, and bottom 1425 regions in their original format. The middle region 1420 is extracted by reference 1430 e.g. using an extractor NAL unit like structure to a second sample 1450 of the second track/Representation. The second sample 1450 also comprises the rearranged top and bottom regions.
- A first track/Representation is formed containing the middle region and the rearranged top and bottom region. A second track/Representation is formed containing the top and bottom regions in their original format and extracting the middle region by reference from the first track/Representation.
- A first track/Representation is formed containing the middle region. A second track/Representation is formed containing the top and bottom regions in their original format and which may also extract the middle region by reference from the first track/Representation. A third track/Representation is formed containing the rearranged top and bottom regions, and which may also extract the middle region by reference from the first track/Representation.

The extraction may be performed by using extractor NAL unit like structures. Alternatively, the extraction may be performed implicitly, e.g. using tile tracks of ISO/IEC 14496-15.

According to an embodiment, a processing entity, e.g. MPD creator, is configured to include a description of the applied nested polygonal chain scan into a manifest or presentation description, such as Media Presentation Description (MPD) of MPEG-DASH, e.g. in an Adaptation Set, Representation, and/or Sub-Representation level.

According to an embodiment, a processing entity, e.g. a DASH client, is configured to parse a description of the applied nested polygonal chain scan from a manifest or presentation description, such as Media Presentation Description (MPD) of MPEG-DASH, e.g. from an Adaptation Set, Representation, and/or Sub-Representation level. The processing entity selects an Adaptation Set, Representation and/or Sub-Representation based on the nested polygonal chain scan that it can support.

According to an embodiment, a processing entity, e.g. a DASH client, is configured to parse dependencies between tracks or Representations. When only the middle region of a first track/Representation is required for decoding and/or rendering while the top and bottom regions in their original format or rearranged format are also present in the first track/Representation, the processing entity may conclude the byte ranges comprising the middle region and request transmission of those byte ranges only.

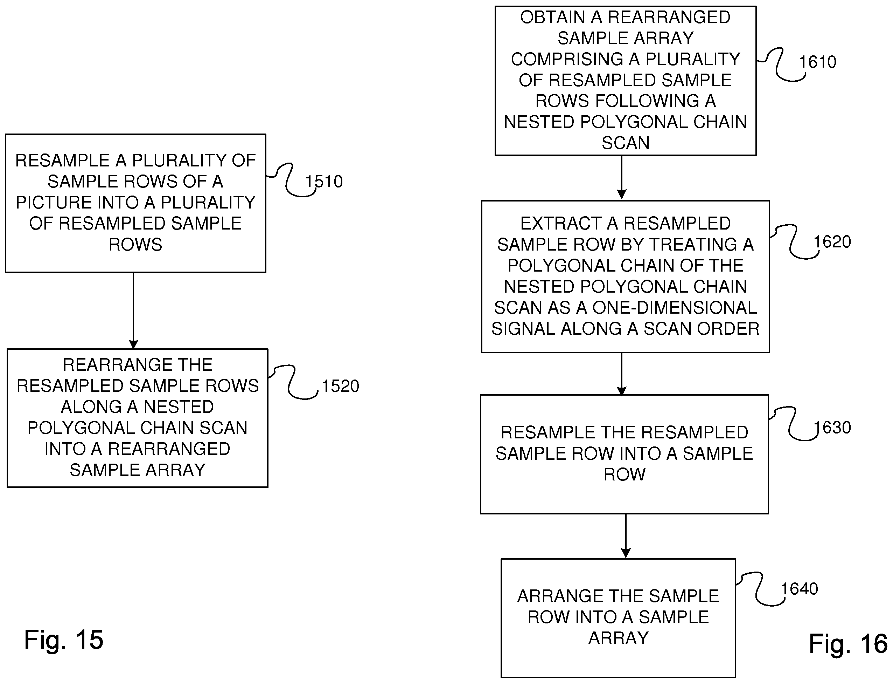

Flowchart of Figure 15 illustrates a method according to an embodiment. The method comprises resampling a plurality of sample rows of a picture into a plurality of resampled sample rows 1510; and rearranging the resampled sample rows along a nested polygonal chain scan into a rearranged sample array 1520. In the method the nested polygonal chain scan may comprise arranging top-most sample row and bottom-most sample row of the picture to an innermost polygonal chain in the rearranged sample array, and arranging sample rows furthest away from the top-most sample row and the bottom-most sample row of the picture to an outmost polygonal chain in the rearranged sample array.

An apparatus according to an embodiment comprises means for resampling a plurality of sample rows of a picture into a plurality of resampled sample rows; and means for rearranging the resampled sample rows along a nested polygonal chain scan into a rearranged sample array. These means may be configured to arrange top-most sample row and bottom-most sample row of the picture to an innermost polygonal chain in the rearranged sample array, and arranging sample rows furthest away from the top-most sample row and the bottom-most sample row of the picture to an outmost polygonal chain in the rearranged sample array. The means of the apparatus comprises a processor, a memory, and a computer program code residing in the memory.

Flowchart of Figure 16 illustrates a method according to another embodiment. The method comprises obtaining a rearranged sample array comprising a plurality of resampled sample rows following a nested polygonal chain scan 1610; extracting a resampled sample row by treating a polygonal chain of the nested polygonal chain scan as a one-dimensional signal along a scan order 1620; resampling the resampled sample row into a sample row 1630; and arranging the sample row into a sample array 1640.

An apparatus according to another embodiment comprises means for obtaining a rearranged sample array comprising a plurality of resampled sample rows following a nested polygonal chain scan; means for extracting a resampled sample row by treating a polygonal chain of the nested polygonal chain scan as a one-dimensional signal along a scan order; means for resampling the resampled sample row into a sample row; and means for arranging the sample row into a sample array. The means of the apparatus comprises a processor, a memory, and a computer program code residing in the memory.

In the above, embodiments for nested polygonal chain mapping of top and bottom regions of panorama picture have been discussed. As described, the embodiments can be implemented as pre-processing for encoding and post-processing for decoding. In addition, the embodiments can be implemented in the (de)coding loop for some pictures. The embodiments can also be implemented as an inter-layer process, where the base layer is an ordinary equirectangular panorama, and the inter-layer processing implements the rectangular ring resampling to the base layer picture, and the enhancement layer codes the rectangular-ring-resampled pictures. As also was discussed, the embodiments can be implemented with motion-constrained tiles, i.e. each of top, middle, and bottom regions forms a separate motion-constrained tile or tile set. The present embodiments can also utilize a tile set extraction, where two versions of the content is encoded - one using ordinary panorama format, and another with rectangular ring resampling. Both versions use motion-constrained tiles, and the middle region of the both is identical and hence needs to be stored only one. Guided rewriting (Fig. 14) can be used to provide an ordinary panorama version and a rectangular-ring-resampled version, referring to the same stored middle region.

The various embodiments may provide advantages. For example, the present embodiments may improve compression performance compared to full equirectangle panorama with the following sequences (the values are % of luma BD rates compared to equirectangular panorama coding). The present embodiments may also reduce the encoding bitrate by reducing the redundant samples in nadir and zenith areas of equirectangular panoramas. Further, the resampled picture may be kept under the original equirectangle projection scheme and the resampling is only a simple 1D function.

In the above, some embodiments have been described with reference to the equirectangular panorama format. However, many example embodiments similarly apply to other panorama formats, such as pseudo-cylindrical panorama formats.

In the above, some embodiments have been described in relation to ISOBMFF and/or formats derived from ISOBMFF. However, many example embodiments similarly apply to other file and segment formats, including but not limited to the Matroska file format.

In the above, some embodiments have been described in relation to MPEG-DASH or DASH. However, example implementations and embodiments similarly apply to other forms of streaming over HTTP, such as the Apple HTTP Live Streaming (HLS), for example. It should be understood that DASH-specific terminology in embodiments can be adjusted to similar terms in other streaming formats and systems.

In the above, some embodiments have been described in relation to Media Presentation Description (MPD) of MPEG-DASH. However, example implementations and embodiments similarly apply to other streaming manifest formats, such as the HLS M3U format, or other stream or presentation description formats, such as SDP (Session Description Protocol), for example.

The various embodiments of the invention can be implemented with the help of computer program code that resides in a memory and causes the relevant apparatuses to carry out the invention. For example, a device may comprise circuitry and electronics for handling, receiving and transmitting data, computer program code in a memory, and a processor that, when running the computer program code, causes the device to carry out the features of an embodiment. Yet further, a network device like a server may comprise circuitry and electronics for handling, receiving and transmitting data, computer program code in a memory, and a processor that, when running the computer program code, causes the network device to carry out the features of an embodiment.

If desired, the different functions discussed herein may be performed in a different order and/or concurrently with other. Furthermore, if desired, one or more of the above-described functions and embodiments may be optional or may be combined.

Although various aspects of the embodiments are set out in the independent claims, other aspects comprise other combinations of features from the described embodiments and/or the dependent claims with the features of the independent claims, and not solely the combinations explicitly set out in the claims.

It is also noted herein that while the above describes example embodiments, these descriptions should not be viewed in a limiting sense. Rather, there are several variations and modifications, which may be made without departing from the scope of the present disclosure as, defined in the appended claims.

## Claims

1. A method, comprising:

   - obtaining a panorama picture (600) having a plurality of sample rows in a top region, a middle region and a bottom region;
   - resampling the plurality of sample rows of the top and the bottom region of the panorama picture (600) into a plurality of resampled sample rows (601, 602, 603, 604, 605, 606, 607, 608, 609, 610, 611, 612) with decreasing sampling density towards the top-most (601) sample row of the top region respectively the bottom-most (612) sample row of the bottom region of the panorama picture (600), while retaining the plurality of sample rows of the middle region; and

- rearranging the plurality of resampled sample rows (601, 602, 603, 604, 605, 606, 607, 608, 609, 610, 611, 612) of the top and the bottom region treated as one-dimensional signals, along a scan consisting of a plurality of nested polygonal chains into a rearranged top sample array and a rearranged bottom sample array, wherein rearranging comprises

arranging the resampled top-most sample row (601) of the top region of the panorama picture (600) to the innermost polygonal chain in the rearranged top sample array (650) and arranging the resampled sample row (606) furthest away from the top-most sample row (601) of the panorama picture (600) to the outmost polygonal chain in the rearranged top sample array (650, 670); and

- arranging the resampled bottom-most sample row (612) of the bottom region of the panorama picture (600) to the innermost polygonal chain in the rearranged bottom sample array (670) and arranging the resampled sample row (607) furthest away from the bottom-most sample row (612) of the panorama picture (600) to the outmost polygonal chain in the rearranged bottom sample array (670); and

- packing the rearranged top and bottom sample arrays (650, 670) into a single video frame together with the middle region or into a video frame separately from the middle region.

2. The method according to claim 1, further comprising

   - encoding the rearranged sample array (650, 670).

3. The method according to claim 1, further comprising

   - obtaining the plurality of sample rows by reconstructing the plurality of sample rows as a part of encoding an original picture or decoding the plurality of sample rows from an encoded picture; and
   - using the rearranged sample array as a reference for intra prediction, inter prediction, or inter-layer prediction.

4. A method, comprising:

   - obtaining a top and a bottom rearranged sample array and a middle region of a panorama picture (600) comprised in a single or separate video frames, the top and the bottom rearranged sample arrays (650, 670) comprising resampled sample rows (601, 602, 603, 604, 605, 606, 607, 608, 609, 610, 611, 612) of a top and a bottom region of the panorama picture (600) arranged as one-dimensional signals along a scan consisting of a plurality of nested polygonal chains,

       wherein the resampled top-most sample row (601) of the top region of the panorama picture (600) is arranged along the innermost polygonal chain in the rearranged top sample array (650), and the resampled sample row (606) furthest away from the top-most sample row (601) of the panorama picture (600) is arranged along the outmost polygonal chain in the rearranged top sample array (650, 670); and
       the resampled bottom-most sample row (612) of the bottom region of the panorama picture (600) is arranged along the innermost polygonal chain in the rearranged bottom sample array (670), and the resampled sample row (607) furthest away from the bottom-most sample row (612) of the panorama picture (600) is arranged along the outmost polygonal chain in the rearranged bottom sample array (670);

   - extracting each resampled sample row by treating a corresponding polygonal chain of the plurality of nested polygonal chains as a one-dimensional signal along a scan order;
   - upsampling the resampled sample rows (601, 602, 603, 604, 605, 606, 607, 608, 609, 610, 611, 612) to the row width of top and bottom regions of the panorama picture;
   - arranging the sample row into a top and a bottom sample array to reconstruct the top and the bottom regions of the panorama picture (600).

5. The method according to claim 4 further comprising:

   - obtaining the rearranged sample array by decoding an encoded frame or by reconstructing a frame as a part of encoding an original frame.

6. An apparatus comprising:

- means for obtaining a panorama picture (600) having a plurality of sample rows in a top region, a middle region and a bottom region;
- means for resampling the plurality of sample rows of the top and the bottom region of the panorama picture (600) into a plurality of resampled sample rows (601, 602, 603, 604, 605, 606, 607, 608, 609, 610, 611, 612) with decreasing sampling density towards the top-most (601) sample row of the top region respectively the bottom-most (612) sample row of the bottom region of the panorama picture (600) , while retaining the plurality of sample rows of the middle region; and
- means for rearranging the plurality of resampled sample rows (601, 602, 603, 604, 605, 606, 607, 608, 609, 610, 611, 612) of the top and the bottom region, treated as one-dimensional signals, along a scan consisting of a plurality of nested polygonal chains to fill a rearranged top sample array and a rearranged bottom sample array, wherein rearranging comprises
arranging the resampled top-most sample row (601) of the top region of the panorama picture (600) to the innermost polygonal chain in the rearranged top sample array (650), and arranging the resampled sample row (606) furthest away from the top-most sample row (601) of the panorama picture (600) to the outmost polygonal chain in the rearranged top sample array (650, 670);
- means for arranging the resampled bottom-most sample row (612) of the bottom region of the panorama picture (600) to the innermost polygonal chain in the rearranged bottom sample array (670) and arranging the resampled sample row (607) furthest away from the bottom-most sample row (612) of the panorama picture (600) to the outmost polygonal chain in the rearranged bottom sample array (670); and
- means for packing the rearranged top and bottom sample arrays (650, 670) into a single video frame together with the middle region or into a video frame separately from the middle region.

7. The apparatus according to claim 6, further comprising means for encoding the rearranged sample array (650, 670).

8. The apparatus according to claim 6, further comprising means for obtaining the plurality of sample rows by reconstructing the plurality of sample rows as a part of encoding an original picture or decoding the plurality of sample rows from an encoded picture; and means for using the rearranged sample array as a reference for intra prediction, inter prediction, or inter-layer prediction.

9. The apparatus according to claim 6 further comprising means for resampling a plurality of sample rows of several regions of the picture into the plurality of resampled sample rows; and means for rearranging the plurality of resampled sample rows into several rearranged sample arrays.

10. The apparatus according to claim 9, further comprising means for packing the several rearranged sample arrays into a single frame.

11. The apparatus according to claim 9, further comprising means for packing the several rearranged sample arrays into different frames.

12. The apparatus according to any of the preceding claims 9 to 11, wherein the nested polygonal chain scan comprises arranging the resampled top-most sample row or a bottom-most sample row of the picture to an innermost polygonal chain in the rearranged sample array, and arranging the resampled sample row furthest away from the top-most sample row or the bottom-most sample row of the picture to an outmost polygonal chain in the rearranged sample array.

13. The apparatus according to any of the preceding claims 9 to 12, wherein the sample row comprises one or more samples from one of the following group:
luma samples, chroma samples, both luma and chroma samples.

14. An apparatus comprising

- means for obtaining a top and a bottom rearranged sample array and a middle region of a panorama picture (600) comprised in a single or separate video frames, the top and the bottom rearranged sample arrays (650, 670) comprising resampled sample rows (601, 602, 603, 604, 605, 606, 607, 608, 609, 610, 611, 612) of a top and a bottom region of the panorama picture (600) arranged as one-dimensional signals along a scan consisting of a plurality of nested polygonal chains,

wherein the resampled top-most sample row (601) of the top region of the panorama picture (600) is arranged along the innermost polygonal chain in the rearranged top sample array (650), and the resampled sample row (606) furthest away from the top-most sample row (601) of the panorama picture (600) is arranged along the outmost polygonal chain in the rearranged top sample array (650, 670); and

the resampled bottom-most sample row (612) of the bottom region of the panorama picture (600) is arranged along the innermost polygonal chain in the rearranged bottom sample array (670), and the resampled sample row (607) furthest away from the bottom-most sample row (612) of the panorama picture (600) is arranged along the outmost polygonal chain in the rearranged bottom sample array (670);

- means for extracting each resampled sample row by treating a corresponding polygonal chain of the plurality of nested polygonal chains as a one-dimensional signal along a scan order;
- means for upsampling the resampled sample rows (601, 602, 603, 604, 605, 606, 607, 608, 609, 610, 611, 612) to the row width of top and bottom regions of the panorama picture; and
- means for arranging the sample row into a top and a bottom sample array to reconstruct the top and the bottom regions of the panorama picture (600).

**15.** The apparatus according to claim 14 further comprising means for obtaining the rearranged sample array by decoding an encoded frame or by reconstructing a frame as a part of encoding an original frame.

**Patentansprüche**

**1.** Verfahren, das Folgendes umfasst:

- Erhalten eines Panoramabildes (600) mit einer Vielzahl von Abtastzeilen in einem oberen Bereich, einem mittleren Bereich und einem unteren Bereich;
- Neuabtasten der Vielzahl von Abtastzeilen des oberen und des unteren Bereichs des Panoramabildes (600) zu einer Vielzahl von neu abgetasteten Abtastzeilen (601, 602, 603, 604, 605, 606, 607, 608, 609, 610, 611, 612) mit einer abnehmenden Abtastdichte zur obersten (601) Abtastzeile des oberen Bereichs bzw. zur untersten (612) Abtastzeile des unteren Bereichs des Panoramabildes (600), während die Vielzahl von Abtastzeilen des mittleren Bereichs beibehalten werden; und
- Neuanordnen der Vielzahl von neu abgetasteten Abtastzeilen (601, 602, 603, 604, 605, 606, 607, 608, 609, 610, 611, 612) des oberen und des unteren Bereichs, die als eindimensionale Signale behandelt werden, entlang eines Scans, der aus einer Vielzahl von verschachtelten polygonalen Ketten besteht, zu einer neu angeordneten oberen Abtastgruppe und einer neu angeordneten unteren Abtastgruppe, wobei das Neuanordnen Folgendes umfasst

Anordnen der neu abgetasteten obersten Abtastzeile (601) des oberen Bereichs des Panoramabildes (600) zur innersten polygonalen Kette in der neu angeordneten oberen Abtastgruppe (650) und Anordnen der neu abgetasteten Abtastzeile (606), die von der obersten Abtastzeile (601) des Panoramabildes (600) am weitesten entfernt ist, zur äußersten polygonalen Kette in der neu angeordneten oberen Abtastgruppe (650, 670); und
- Anordnen der neu abgetasteten untersten Abtastzeile (612) des unteren Bereichs des Panoramabildes (600) zur innersten polygonalen Kette in der neu angeordneten unteren Abtastgruppe (670) und Anordnen der neu abgetasteten Abtastzeile (607), die von der untersten Abtastzeile (612) des Panoramabildes (600) am weitesten entfernt ist, zur äußersten polygonalen Kette in der neu angeordneten unteren Abtastgruppe (670); und
- Packen der neu angeordneten oberen und unteren Abtastgruppe (650, 670) in einen einzelnen Videoframe zusammen mit dem mittleren Bereich oder in einen vom mittleren Bereich getrennten Videoframe.

**2.** Verfahren nach Anspruch 1, das ferner Folgendes umfasst

- Codieren der neu angeordneten Abtastgruppe (650, 670).

**3.** Verfahren nach Anspruch 1, das ferner Folgendes umfasst

- Erhalten der Vielzahl von Abtastzeilen durch Rekonstruieren der Vielzahl von Abtastzeilen als Teil des Codierens eines Originalbildes oder des Decodierens der Vielzahl von Abtastzeilen aus einem codierten Bild; und
- Verwenden der neu angeordneten Abtastgruppe als eine Referenz für eine Intravorhersage, eine Intervorhersage oder eine Zwischenschichtvorhersage.

**4.** Verfahren, das Folgendes umfasst:

- Erhalten einer oberen und einer unteren neu angeordneten Abtastgruppe und eines mittleren Bereichs eines Panoramabildes (600), die in einem einzelnen oder in separaten Videoframes umfasst sind, wobei die obere und die untere neu angeordnete Abtastgruppe (650, 670) neu abgetastete Abtastzeilen (601, 602, 603, 604, 605, 606, 607, 608, 609, 610, 611, 612) eines oberen und eines unteren Bereichs des Panoramabildes (600) umfassen, die entlang eines Scans, der aus einer Vielzahl von verschachtelten polygonalen Ketten besteht, als eindimensionale Signale angeordnet sind,

wobei die neu abgetastete oberste Abtastzeile (601) des oberen Bereichs des Panoramabildes (600) entlang der innersten polygonalen Kette in der neu angeordneten oberen Abtastgruppe (650) angeordnet ist und die neu abgetastete Abtastzeile (606), die von der obersten Abtastzeile (601) des Panoramabildes (600) am weitesten entfernt ist, entlang der äußersten polygonalen Kette in der neu angeordneten oberen Abtastgruppe (650, 670) angeordnet ist; und
die neu abgetastete unterste Abtastzeile (612) des unteren Bereichs des Panoramabildes (600) ist entlang der innersten polygonalen Kette in der neu angeordneten unteren Abtastgruppe (670) angeordnet und die neu abgetastete Abtastzeile (607), die von der untersten Abtastzeile (612) des Panoramabildes (600) am weitesten entfernt ist, ist entlang der äußersten polygonalen Kette in der neu angeordneten unteren Abtastgruppe (670) angeordnet;

- Extrahieren von jeder neu abgetasteten Abtastzeile durch Behandeln einer entsprechenden polygonalen Kette der Vielzahl von verschachtelten polygonalen Ketten als ein eindimensionales Signal entlang einer Scanreihenfolge;
- Upsampling der neu abgetasteten Abtastzeilen (601, 602, 603, 604, 605, 606, 607, 608, 609, 610, 611, 612) zur Zeilenbreite eines oberen und eines unteren Bereichs des Panoramabildes;
- Anordnen der Abtastzeile in einer oberen und einer unteren Abtastgruppe, um den oberen und den unteren Bereich des Panoramabildes (600) zu rekonstruieren.

5. Verfahren nach Anspruch 4, das ferner Folgendes umfasst:

- Erhalten der neu angeordneten Abtastgruppe durch Decodieren eines codierten Frames oder Rekonstruieren eines Frames als Teil des Codierens eines Originalframes.

6. Vorrichtung, die Folgendes umfasst:

- Mittel zum Erhalten eines Panoramabildes (600) mit einer Vielzahl von Abtastzeilen in einem oberen Bereich, einem mittleren Bereich und einem unteren Bereich;
- Mittel zum Neuabtasten der Vielzahl von Abtastzeilen des oberen und des unteren Bereichs des Panoramabildes (600) zu einer Vielzahl von neu abgetasteten Abtastzeilen (601, 602, 603, 604, 605, 606, 607, 608, 609, 610, 611, 612) mit einer abnehmenden Abtastdichte zur obersten (601) Abtastzeile des oberen Bereichs bzw. zur untersten (612) Abtastzeile des unteren Bereichs des Panoramabildes (600), während die Vielzahl von Abtastzeilen des mittleren Bereichs beibehalten werden; und
- Mittel zum Neuanordnen der Vielzahl von neu abgetasteten Abtastzeilen (601, 602, 603, 604, 605, 606, 607, 608, 609, 610, 611, 612) des oberen und des unteren Bereichs, die als eindimensionale Signale behandelt werden, entlang eines Scans, der aus einer Vielzahl von verschachtelten polygonalen Ketten besteht, um eine neu angeordnete obere Abtastgruppe und eine neu angeordnete untere Abtastgruppe zu füllen, wobei das Neuanordnen Folgendes umfasst
Anordnen der neu abgetasteten obersten Abtastzeile (601) des oberen Bereichs des Panoramabildes (600) zur innersten polygonalen Kette in der neu angeordneten oberen Abtastgruppe (650) und Anordnen der neu abgetasteten Abtastzeile (606), die von der obersten Abtastzeile (601) des Panoramabildes (600) am weitesten entfernt ist, zur äußersten polygonalen Kette in der neu angeordneten oberen Abtastgruppe (650, 670);
- Mittel zum Anordnen der neu abgetasteten untersten Abtastzeile (612) des unteren Bereichs des Panoramabildes (600) zur innersten polygonalen Kette in der neu angeordneten unteren Abtastgruppe (670) und Anordnen der neu abgetasteten Abtastzeile (607), die von der untersten Abtastzeile (612) des Panoramabildes (600) am weitesten entfernt ist, zur äußersten polygonalen Kette in der neu angeordneten unteren Abtastgruppe (670); und
- Mittel zum Packen der neu angeordneten oberen und unteren Abtastgruppe (650, 670) in einen einzelnen Videoframe zusammen mit dem mittleren Bereich oder in einen vom mittleren Bereich getrennten Videoframe.

7. Vorrichtung nach Anspruch 6, die ferner Mittel zum Codieren der neu angeordneten Abtastgruppe (650, 670) umfasst.

**8.** Vorrichtung nach Anspruch 6, die ferner Mittel zum Erhalten der Vielzahl von Abtastzeilen durch Rekonstruieren der Vielzahl von Abtastzeilen als Teil des Codierens eines Originalbildes oder des Decodierens der Vielzahl von Abtastzeilen aus einem codierten Bild; und Mittel zum Verwenden der neu angeordneten Abtastgruppe als eine Referenz für eine Intravorhersage, eine Intervorhersage oder eine Zwischenschichtvorhersage, umfasst.

**9.** Vorrichtung nach Anspruch 6, die ferner Mittel zum Neuabtasten einer Vielzahl von Abtastzeilen von mehreren Bereichen des Bildes zu einer Vielzahl von neu abgetasteten Abtastzeilen; und Mittel zum Neuanordnen der Vielzahl von neu abgetasteten Abtastzeilen zu mehreren neu angeordneten Abtastgruppen, umfasst.

**10.** Vorrichtung nach Anspruch 9, die ferner Mittel zum Packen der mehreren neu angeordneten Abtastgruppen in einen einzelnen Frame umfasst.

**11.** Vorrichtung nach Anspruch 9, die ferner Mittel zum Packen der mehreren neu angeordneten Abtastgruppen in verschiedene Frames umfasst.

**12.** Vorrichtung nach einem der vorhergehenden Ansprüche 9 bis 11, wobei der verschachtelte polygonale Kettenscan das Anordnen der neu abgetasteten obersten Abtastzeile oder einer untersten Abtastzeile des Bildes zu einer innersten polygonalen Kette in der neu angeordneten Abtastgruppe und das Anordnen der neu abgetasteten Abtastzeile, die von der obersten Abtastzeile oder der untersten Abtastzeile des Bildes am weitesten entfernt ist, zu einer äußersten polygonalen Kette in der neu angeordneten Abtastgruppe umfasst.

**13.** Vorrichtung nach einem der vorhergehenden Ansprüche 9 bis 12, wobei die Abtastzeile eine oder mehrere Abtastungen von einem der folgenden Gruppe umfasst: Lumaabtastungen, Chromaabtastungen, sowohl Luma- als auch Chromaabtastungen.

**14.** Vorrichtung, die Folgendes umfasst

- Mittel zum Erhalten einer oberen und einer unteren neu angeordneten Abtastgruppe und eines mittleren Bereichs eines Panoramabildes (600), die in einem einzelnen oder in separaten Videoframes umfasst sind, wobei die obere und die untere neu angeordnete Abtastgruppe (650, 670) neu abgetastete Abtastzeilen (601, 602, 603, 604, 605, 606, 607, 608, 609, 610, 611, 612) eines oberen und eines unteren Bereichs des Panoramabildes (600) umfassen, die entlang eines Scans, der aus einer Vielzahl von verschachtelten polygonalen Ketten besteht, als eindimensionale Signale angeordnet sind,

wobei die neu abgetastete oberste Abtastzeile (601) des oberen Bereichs des Panoramabildes (600) entlang der innersten polygonalen Kette in der neu angeordneten oberen Abtastgruppe (650) angeordnet ist und die neu abgetastete Abtastzeile (606), die von der obersten Abtastzeile (601) des Panoramabildes (600) am weitesten entfernt ist, entlang der äußersten polygonalen Kette in der neu angeordneten oberen Abtastgruppe (650, 670) angeordnet ist; und
die neu abgetastete unterste Abtastzeile (612) des unteren Bereichs des Panoramabildes (600) ist entlang der innersten polygonalen Kette in der neu angeordneten unteren Abtastgruppe (670) angeordnet und die neu abgetastete Abtastzeile (607), die von der untersten Abtastzeile (612) des Panoramabildes (600) am weitesten entfernt ist, ist entlang der äußersten polygonalen Kette in der neu angeordneten unteren Abtastgruppe (670) angeordnet;

- Mittel zum Extrahieren von jeder neu abgetasteten Abtastzeile durch Behandeln einer entsprechenden polygonalen Kette der Vielzahl von verschachtelten polygonalen Ketten als ein eindimensionales Signal entlang einer Scanreihenfolge;
- Mittel zum Upsampling der neu abgetasteten Abtastzeilen (601, 602, 603, 604, 605, 606, 607, 608, 609, 610, 611, 612) zur Zeilenbreite eines oberen und eines unteren Bereichs des Panoramabildes; und
- Mittel zum Anordnen der Abtastzeile in einer oberen und einer unteren Abtastgruppe, um den oberen und den unteren Bereich des Panoramabildes (600) zu rekonstruieren.

**15.** Vorrichtung nach Anspruch 14, die ferner Mittel zum Erhalten der neu angeordneten Abtastgruppe durch Decodieren eines codierten Frames oder Rekonstruieren eines Frames als Teil des Codierens eines Originalframes umfasst.

**Revendications**

1. Procédé, comprenant :

   - l'obtention d'une image panoramique (600) ayant une pluralité de rangées d'échantillons dans une région supérieure, une région centrale et une région inférieure ;
   - le rééchantillonnage de la pluralité de rangées d'échantillons des régions supérieure et inférieure de l'image panoramique (600) en une pluralité de rangées d'échantillons (601, 602, 603, 604, 605, 606, 607, 608, 609, 610, 611, 612) rééchantillonnées avec une densité d'échantillonnage décroissante vers la rangée d'échantillons (601) la plus en haut de la région supérieure et respectivement la rangée d'échantillons (612) la plus en bas de la région inférieure de l'image panoramique (600), tout en conservant la pluralité de rangées d'échantillons de la région centrale ; et
   - le réagencement de la pluralité de rangées d'échantillons (601, 602, 603, 604, 605, 606, 607, 608, 609, 610, 611, 612) rééchantillonnées des régions supérieure et inférieure traitées comme des signaux unidimensionnels, le long d'un balayage consistant en une pluralité de chaînes polygonales imbriquées en un réseau d'échantillons supérieurs réagencés et un réseau d'échantillons inférieurs réagencés, dans lequel le réagencement comprend l'agencement de la rangée d'échantillons (601) rééchantillonnée la plus en haut de la région supérieure de l'image panoramique (600) vers la chaîne polygonale la plus à l'intérieur dans le réseau d'échantillons supérieurs (650) réagencés, et l'agencement de la rangée d'échantillon (606) rééchantillonnée la plus éloignée de la rangée d'échantillons (601) la plus en haut de l'image panoramique (600) vers la chaîne polygonale la plus à l'extérieur dans le réseau d'échantillons supérieurs (650, 670) réagencés ; et
   - l'agencement de la rangée d'échantillons (612) rééchantillonnée la plus en bas de la région inférieure de l'image panoramique (600) vers la chaîne polygonale la plus à l'intérieur dans le réseau d'échantillons inférieurs (670) réagencés et l'agencement de la rangée d'échantillon (607) rééchantillonnée la plus éloignée de la rangée d'échantillons (612) la plus en bas de l'image panoramique (600) vers la chaîne polygonale la plus à l'extérieur dans le réseau d'échantillons inférieurs (670) réagencés ; et
   - la compression des réseaux d'échantillons supérieurs et inférieurs (650, 670) réagencés en une seule trame vidéo avec la région centrale ou en une trame vidéo séparée de la région centrale.

2. Procédé selon la revendication 1, comprenant en outre

   - le codage du réseau d'échantillons (650, 670) réagencés.

3. Procédé selon la revendication 1, comprenant en outre

   - l'obtention de la pluralité de rangées d'échantillons en reconstruisant la pluralité de rangées d'échantillons dans le cadre du codage d'une image originale en décodant la pluralité de rangées d'échantillons à partir d'une image codée ; et
   - l'utilisation du réseau d'échantillons réagencés comme référence pour une prédiction intra, une prédiction inter ou une prédiction inter-couches.

4. Procédé comprenant :

   - l'obtention de réseaux d'échantillons supérieurs et inférieurs réagencés et d'une région centrale d'une image panoramique (600) comprise dans une seule trame vidéo ou des trames vidéo séparées, les réseaux d'échantillons supérieurs et inférieurs réagencés (650,670) comprenant des rangées d'échantillons (601, 602, 603, 604, 605, 606, 607, 608, 609, 610, 611, 612) rééchantillonnées de régions supérieure et inférieure de l'image panoramique (600) agencées sous forme de signaux unidimensionnels le long d'un balayage consistant en une pluralité de chaînes polygonales imbriquées,

   dans lequel la rangée d'échantillons (601) rééchantillonnée la plus en haut de la région supérieure de l'image panoramique (600) est agencée le long de la chaîne polygonale la plus à l'intérieur dans le réseau d'échantillons supérieurs (650) réagencés, et la rangée d'échantillon (606) rééchantillonnée la plus éloignée de la rangée d'échantillons (601) la plus en haut de l'image panoramique (600) est agencée le long de la chaîne polygonale la plus à l'extérieur dans le réseau d'échantillons supérieurs (650, 670) réagencés ; et la rangée d'échantillons (612) rééchantillonnée la plus en bas de la région inférieure de l'image panoramique (600) est agencée le long de la chaîne polygonale la plus à l'intérieur dans le réseau d'échantillons inférieurs (670) réagencés, et la rangée d'échantillon (607) rééchantillonnée la plus éloignée de la rangée d'échantillons (612) la plus en bas de l'image panoramique (600) est agencée le long de la chaîne polygonale la plus à l'extérieur dans le réseau d'échantillons inférieurs (670) réagencés ;

- l'extraction de chaque rangée d'échantillon rééchantillonnée en traitant une chaîne polygonale correspondante de la pluralité de chaînes polygonales imbriquées comme un signal unidimensionnel suivant un ordre de balayage ;
- le suréchantillonnage des rangées d'échantillons (601, 602, 603, 604, 605, 606, 607, 608, 609, 610, 611, 612) rééchantillonnées à la largeur de rangées de régions supérieure et inférieure de l'image panoramique ;
- l'agencement de la rangée d'échantillons en réseaux d'échantillons supérieurs et inférieurs pour reconstruire les régions supérieure et inférieure de l'image panoramique (600).

5. Procédé selon la revendication 4 comprenant en outre :

- l'obtention du réseau d'échantillons réagencés en décodant une trame codée ou en reconstruisant une trame dans le cadre du codage d'une trame originale.

6. Appareil comprenant :

- des moyens pour obtenir une image panoramique (600) ayant une pluralité de rangées d'échantillons dans une région supérieure, une région centrale et une région inférieure ;
- des moyens pour rééchantillonner la pluralité de rangées d'échantillons des régions supérieure et inférieure de l'image panoramique (600) en une pluralité de rangées d'échantillons (601, 602, 603, 604, 605, 606, 607, 608, 609, 610, 611, 612) rééchantillonnées avec une densité d'échantillonnage décroissante vers la rangée d'échantillons (601) la plus en haut de la région supérieure et respectivement la rangée d'échantillons (612) la plus en bas de la région inférieure de l'image panoramique (600), tout en conservant la pluralité de rangées d'échantillons de la région centrale ; et
- des moyens pour réagencer la pluralité de rangées d'échantillons (601, 602, 603, 604, 605, 606, 607, 608, 609, 610, 611, 612) rééchantillonnées des régions supérieure et inférieure, traitées sous forme de signaux unidimensionnels, le long d'un balayage consistant en une pluralité de chaînes polygonales imbriquées pour remplir un réseau d'échantillons supérieurs réagencés et un réseau d'échantillons inférieurs réagencés, dans lequel le réagencement comprend
l'agencement de la rangée d'échantillons (601) rééchantillonnée la plus en haut de la région supérieure de l'image panoramique (600) vers la chaîne polygonale la plus à l'intérieur dans le réseau d'échantillons supérieurs (650) réagencés, et l'agencement de la rangée d'échantillon (606) rééchantillonnée la plus éloignée de la rangée d'échantillons (601) la plus en haut de l'image panoramique (600) vers la chaîne polygonale la plus à l'extérieur dans le réseau d'échantillons supérieurs (650, 670) réagencés ;
- des moyens pour agencer la rangée d'échantillons (612) rééchantillonnée la plus en bas de la région inférieure de l'image panoramique (600) vers la chaîne polygonale la plus à l'intérieur dans le réseau d'échantillons inférieurs (670) réagencés et agencer la rangée d'échantillon (607) rééchantillonnée la plus éloignée de la rangée d'échantillons (612) la plus en bas de l'image panoramique (600) vers la chaîne polygonale la plus à l'extérieur dans le réseau d'échantillons inférieurs (670) réagencés ; et
- des moyens pour compresser les réseaux d'échantillons supérieurs et inférieurs (650, 670) réagencés en une seule trame vidéo avec la région centrale ou en une trame vidéo séparée de la région centrale.

7. Appareil selon la revendication 6, comprenant en outre des moyens pour coder le réseau d'échantillons (650, 670) réagencés.

8. Appareil selon la revendication 6, comprenant en outre des moyens pour obtenir la pluralité de rangées d'échantillons en reconstruisant la pluralité de rangées d'échantillons dans le cadre du codage d'une image originale en décodant la pluralité de rangées d'échantillons à partir d'une image codée ; et des moyens pour utiliser le réseau d'échantillons réagencés comme référence pour une prédiction intra, une prédiction inter ou une prédiction inter-couches.

9. Appareil selon la revendication 6, comprenant en outre des moyens pour rééchantillonner une pluralité de rangées d'échantillons de plusieurs régions de l'image dans la pluralité de rangées d'échantillons rééchantillonnées ; et des moyens pour réagencer la pluralité de rangées d'échantillons rééchantillonnées dans de multiples réseaux d'échantillons réagencés.

10. Appareil selon la revendication 9, comprenant en outre des moyens pour compresser les multiples réseaux d'échantillons réagencés en une seule trame.

11. Appareil selon la revendication 9, comprenant en outre des moyens pour compresser les multiples réseaux d'échantillons réagencés en trames différentes.

12. Appareil selon l'une des revendications précédentes 9 à 11, dans lequel le balayage de la chaîne polygonale imbriquée comprend l'agencement de la rangée d'échantillons rééchantillonnée la plus en haut ou d'une rangée d'échantillons la plus en bas de l'image vers une chaîne polygonale la plus à l'intérieur dans le réseau d'échantillons réagencés, et l'agencement de la rangée d'échantillon rééchantillonnée la plus éloignée de la rangée d'échantillons la plus en haut ou de la rangée d'échantillons la plus en bas de l'image à une chaîne polygonale la plus à l'extérieur dans le réseau d'échantillons réagencés.

13. Appareil selon l'une des revendications précédentes 9 à 12, dans lequel la rangée d'échantillons comprend un ou plusieurs échantillons appartenant à l'un des groupes suivants : échantillons huma, échantillons Chroma, et échantillons à la fois huma et chroma.

14. Appareil comprenant

- des moyens pour obtenir des réseaux d'échantillons supérieurs et inférieurs réagencés et une région centrale d'une image panoramique (600) comprise dans une seule trame vidéo ou des trames vidéo séparées, les réseaux d'échantillons supérieurs et inférieurs réagencés (650, 670) comprenant des rangées d'échantillons (601, 602, 603, 604, 605, 606, 607, 608, 609, 610, 611, 612) rééchantillonnées de régions supérieure et inférieure de l'image panoramique (600) agencées sous forme de signaux unidimensionnels le long d'un balayage consistant en une pluralité de chaînes polygonales imbriquées,

dans lequel la rangée d'échantillons rééchantillonnée la plus en haut (601) de la région supérieure de l'image panoramique (600) est agencée le long de la chaîne polygonale la plus à l'intérieur dans le réseau d'échantillons supérieurs (650) réagencés, et la rangée d'échantillon (606) rééchantillonnée la plus éloignée de la rangée d'échantillons (601) la plus en haut de l'image panoramique (600) est agencée le long de la chaîne polygonale la plus à l'extérieur dans le réseau d'échantillons supérieurs (650, 670) réagencés ; et la rangée d'échantillons (612) rééchantillonnée la plus en bas de la région inférieure de l'image panoramique (600) est agencée le long de la chaîne polygonale la plus à l'intérieur dans le réseau d'échantillons inférieurs (670) réagencés, et la rangée d'échantillon (607) rééchantillonnée la plus éloignée de la rangée d'échantillons (612) la plus en bas de l'image panoramique (600) est agencée le long de la chaîne polygonale la plus à l'extérieur dans le réseau d'échantillons inférieurs (670) réagencés ;

- des moyens pour extraire chaque rangée d'échantillon rééchantillonnée en traitant une chaîne polygonale correspondante de la pluralité de chaînes polygonales imbriquées comme un signal unidimensionnel suivant un ordre de balayage ;
- des moyens pour suréchantillonner les rangées d'échantillons (601, 602, 603, 604, 605, 606, 607, 608, 609, 610, 611, 612) rééchantillonnées à la largeur de rangées de régions supérieure et inférieure de l'image panoramique ; et
- des moyens pour agencer la rangée d'échantillons en réseaux d'échantillons supérieurs et inférieurs pour reconstruire les régions supérieure et inférieure de l'image panoramique (600).

15. Appareil selon la revendication 14, comprenant en outre des moyens pour obtenir le réseau d'échantillons réagencés en décodant une trame codée ou en reconstruisant une trame dans le cadre du codage d'une trame originale.

Fig. 1

Fig. 2

EP 3 523 956 B1

Fig. 3

EP 3 523 956 B1

Fig. 4

Fig. 5

Fig. 6

EP 3 523 956 B1

Fig. 7a

Fig. 7b

Fig. 8

Fig. 9

Panorama Picture

| Top |
| Middle |
| Bottom |

900

905

Resampling/ packing

Pre-processed and frame packed Picture

910

| Middle | TOP | Bottom |

Encoding → bitstream

915

bitstream → decoding →

| Middle | TOP | Bottom |

925

930

Fig. 10

EP 3 523 956 B1

Panorama Picture

| Top |
|-----|
| Middle |
| Bottom |

→ Resampling/ packing →

Pre-processed and frame packed Picture

| Middle | TOP | Bottom |

→ Encoding With motion constrained tiles → bitstream

Fig. 11

Panorama Picture    1,100

| Top |
| Middle |
| Bottom |

→ Resampling/ packing →

Pre-processed and frame packed Picture

| | Middle | | TOP | Bottom |

→ Encoding → bitstream

Panorama Picture    1,100

| Top |
| Middle |
| Bottom |

→ Resampling/ packing →

Pre-processed and frame packed Picture

| | Middle | | |

top

bottom

→ Encoding → bitstream

Fig. 12

EP 3 523 956 B1

UncompressedPanorama Picture Pn, n >= 0

| Top |
| Middle |
| Bottom |

Enhancement layer

Resampling/ packing

Pre-processed Panorama Picture

| Middle | TOP | Bottom |

Encoding

Reconstructed Picture, Rn, n >= 0

| Middle | TOP | Bottom |

reference picture(s) Inter-layer Prediction Rm, m <= n

decoded picture buffer

Uncompressed Panorama Picture Po

| Top |
| Middle |
| Bottom |

Encoding

Base layer

Reconstructed Panorama Picture

| Top |
| Middle |
| Bottom |

Resampling/ packing

| Middle | TOP | Bottom |

Reconstructed Picture Ro

Fig. 13

EP 3 523 956 B1

1410    Panorama Picture

| Top | 1415 |
| Middle | 1420 |
| Bottom | 1425 |

1430

1450

| Middle | TOP | Bottom |

Fig. 14

RESAMPLE A PLURALITY OF
SAMPLE ROWS OF A
PICTURE INTO A PLURALITY
OF RESAMPLED SAMPLE
ROWS

1510

REARRANGE THE
RESAMPLED SAMPLE ROWS
ALONG A NESTED
POLYGONAL CHAIN SCAN
INTO A REARRANGED
SAMPLE ARRAY

1520

Fig. 15

OBTAIN A REARRANGED
SAMPLE ARRAY
COMPRISING A PLURALITY
OF RESAMPLED SAMPLE
ROWS FOLLOWING A
NESTED POLYGONAL CHAIN
SCAN

1610

EXTRACT A RESAMPLED
SAMPLE ROW BY TREATING A
POLYGONAL CHAIN OF THE
NESTED POLYGONAL CHAIN
SCAN AS A ONE-DIMENSIONAL
SIGNAL ALONG A SCAN ORDER

1620

RESAMPLE THE RESAMPLED
SAMPLE ROW INTO A SAMPLE
ROW

1630

ARRANGE THE SAMPLE
ROW INTO A SAMPLE
ARRAY

1640

Fig. 16

EP 3 523 956 B1

**REFERENCES CITED IN THE DESCRIPTION**

**Patent documents cited in the description**

- EP 3511909 A

**Non-patent literature cited in the description**

- Transparent end-to-end packet-switched streaming service (PSS); protocols and codecs. *3GPP TS 26.234*